(19) Europäisches Patentamt
European Patent Office
Office européen des brevets

(11) **EP 3 812 255 A1**

(12) **EUROPEAN PATENT APPLICATION**
published in accordance with Art. 153(4) EPC

(43) Date of publication:
**28.04.2021 Bulletin 2021/17**

(21) Application number: **19821597.2**

(22) Date of filing: **21.06.2019**

(51) Int Cl.:
**B62K 5/10** (2013.01)   **B62J 99/00** (2020.01)
**B62K 5/027** (2013.01)

(86) International application number:
**PCT/JP2019/024800**

(87) International publication number:
**WO 2019/245042 (26.12.2019 Gazette 2019/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.06.2018   JP 2018118875**

(71) Applicant: **Equos Research Co., Ltd.**
**Tokyo 101-0021 (JP)**

(72) Inventors:
• **ARAKI, Keizo**
**Tokyo 101-0021 (JP)**
• **MIZUNO, Akira**
**Tokyo 101-0021 (JP)**
• **KUBO, Shota**
**Tokyo 101-0021 (JP)**

(74) Representative: **TBK**
**Bavariaring 4-6**
**80336 München (DE)**

(54)   **VEHICLE**

(57)   A vehicle includes: a vehicle body; one or more turn wheels turnable to right and left; a lean actuator configured to apply a lean torque to the vehicle body; a turn wheel support unit; and a controller. The turn wheel support unit includes: a supporting member that rotatably supports the one or more turn wheels; and a turning actuator configured to apply a turning torque to the supporting member. The controller is configured to determine a target lean angle, and determine the target lean torque and the target turning torque using the target lean angle.

Fig. 12

**Description**

Technical Field

This specification relates to a vehicle which turns by leaning its vehicle body.

Background Art

Vehicles of which vehicle bodies lean during turning are known. A variety of techniques have been proposed for smoothly leaning a vehicle body to the inside of turn. For example, a technique has been proposed that, when a driver begins to operate a handlebar, changes a steering angle of a steered wheel toward an opposite direction to a rotational direction of handlebar. This technique causes a turn in a direction opposite to a direction intended by the driver, and a centrifugal force generated by the turn causes the vehicle body to lean to the inside of the turn intended by the driver. Accordingly, it is possible to smoothly lean the vehicle body to the inside of the turn.

Prior Art Document

Patent Document

Patent Document 1 Japanese Laid-Open Patent Publication No. 2013-23166

Summary of the Invention

Problems to be Solved by the Invention

A vehicle may include a device that outputs a lean torque for controlling a lean angle of vehicle body, and a device that outputs a turning torque causing a turn of a turn wheel, which is turnable to right and left relative to a direction of forward movement of the vehicle. There has been insufficient effort to improve driving stability of such a vehicle.
This specification discloses the technique of improving driving stability of vehicle that includes a device that outputs a lean torque, and a device that outputs a turning torque.

Means for Solving the Problems

The technique disclosed herein can be implemented as any of application examples listed below.

[Application Example 1]

A vehicle comprising:

a vehicle body;
N (N is an integer equal to or larger than 2) wheels including one or more turn wheels turnable to right and left relative to a forward movement direction of the vehicle, the N wheels including at least one front wheel and at least one rear wheel;
a lean angle sensor configured to measure a lean angle in a width direction of the vehicle body;
a lean actuator configured to apply to the vehicle body a lean torque for controlling the lean angle of the vehicle body;
an operation input unit configured to be handled to input an operation amount indicative of a turning direction and a degree of turn;
a turn wheel support unit that supports the one or more turn wheels; and
a controller,
wherein the turn wheel support unit comprises:

a supporting member that rotatably supports the one or more turn wheels;
a turning device that supports the supporting member turnably to right and left relative to the vehicle body; and
a turning actuator configured to apply to the supporting member a turning torque for turning the supporting member, and

wherein the controller is configured to:

determine a target lean angle using one or more parameters including the operation amount, the target lean angle being a lean angle targeted by the vehicle body;

determine a target lean torque and a target turning torque using the target lean angle, the target lean torque being a target torque of the lean actuator, the target turning torque being a target torque of the turning actuator;

control the lean actuator according to the target lean torque; and

control the turning actuator according to the target turning torque.

According to this configuration, both of the target lean torque and the target turning torque are determined using the target lean angle, and therefore the driving stability of the vehicle can be improved that includes the lean actuator and the turning actuator.

[Application Example 2]

The vehicle according to Application Example 1,
wherein if a rotational direction to rotate the vehicle body in its width direction so that the lean angle approaches the target lean angle, the rotational direction being either a right direction or a left direction, is referred to as a target direction, the controller has a counter torque mode as a control mode for the turning actuator, the counter torque mode being a control mode that determines the target turning torque to be a counter torque causing the supporting member to rotate in a direction opposite to the target direction.

According to this configuration, in the counter torque mode, the target turning torque is determined to be a torque causing the supporting member to rotate in a direction opposite to the target direction, and therefore the lean angle of the vehicle body can readily approach the target lean angle.

[Application Example 3]

The vehicle according to Application Example 2,
wherein the controller is configured in the counter torque mode to:

determine the target lean torque and the target turning torque using a lean angle difference between the target lean angle and the lean angle of the vehicle body; and

determine the target turning torque so that a magnitude of the target turning torque when a magnitude of the lean angle difference is larger than a first threshold is larger than the magnitude of the target turning torque when the magnitude of the lean angle difference is smaller than the first threshold.

According to this configuration, when the magnitude of the lean angle difference is larger than the first threshold, the magnitude of the target turning torque, which is a counter torque, is larger, and therefore the lean angle of the vehicle body can be changed readily. When the magnitude of the lean angle difference is smaller than the first threshold, the magnitude of the target turning torque, which is a counter torque, is smaller, and therefore unintended change can be suppressed in the lean angle of the vehicle body.

[Application Example 4]

The vehicle according to Application Example 3,
wherein if a ratio of the magnitude of the target turning torque, the target turning torque being the counter torque, to the magnitude of the lean angle difference is referred to as a counter turning torque ratio,
the controller is configured in the counter torque mode to determine the target turning torque so that the counter turning torque ratio when the magnitude of the lean angle difference is larger than the first threshold is larger than the counter turning torque ratio when the magnitude of the lean angle difference is smaller than the first threshold.

According to this configuration, when the magnitude of the lean angle difference is larger than the first threshold, the magnitude of the target turning torque, which is a counter torque, is larger properly as compared to when the magnitude of the lean angle difference is smaller than the first threshold. Therefore, when the magnitude of the lean angle difference is larger, the lean angle of the vehicle body can be changed readily, and when the magnitude of the lean angle difference is smaller, unintended change can be suppressed in the lean angle of the vehicle body.

[Application Example 5]

The vehicle according to Application Example 3 or 4,
wherein if a ratio of the magnitude of the target lean torque to the magnitude of the lean angle difference is referred to as a lean torque ratio,
the controller is configured in the counter torque mode to determine the target lean torque so that the lean torque ratio when the magnitude of the lean angle difference is within a first range of larger than the first threshold is smaller than the lean torque ratio when the magnitude of the lean angle difference is within a second range, the second range being a particular range of smaller than the first threshold.

According to this configuration, when the magnitude of the lean angle difference is within the first range of larger than the first threshold, excessive increase in the target lean torque is suppressed. Therefore, due to a torque of the turning actuator according to the target turning torque, which is a counter torque, the lean angle of the vehicle body can be changed properly.

[Application Example 6]

The vehicle according to Application Example 5,
wherein the first range is a range of larger than the first threshold and smaller than a second threshold, the second threshold being larger than the first threshold, and
wherein the controller is configured in the counter torque mode to determine the target lean torque so that the lean torque ratio when the magnitude of the lean angle difference is larger than the second threshold is larger than the lean torque ratio when the magnitude of the lean angle difference is within the first range.

According to this configuration, when the magnitude of the lean angle difference is larger than the second threshold, the lean angle of the vehicle body can be changed readily by using the torque of the lean actuator in addition to the torque of the turning actuator.

[Application Example 7]

The vehicle according to Application Example 5 or 6,
wherein the second range is a range of larger than a third threshold and smaller than the first threshold, the third threshold being smaller than the first threshold, and
wherein the controller is configured in the counter torque mode to determine the target lean torque so that the lean torque ratio when the magnitude of the lean angle difference is smaller than the third threshold is smaller than the lean torque ratio when the magnitude of the lean angle difference is within the second range.

According to this configuration, when the magnitude of the lean angle difference is smaller than the third threshold, excessive increase in the target lean torque is suppressed. Therefore, due to a torque of the turning actuator according to the target turning torque, which is a counter torque, the lean angle of the vehicle body can be changed properly.

[Application Example 8]

The vehicle according to any one of Application Examples 1 to 7,
wherein if a ratio of the magnitude of the target turning torque, the target turning torque being the counter torque, to the magnitude of the lean angle difference is referred to as a counter turning torque ratio,
the controller is configured in the counter torque mode to determine the target turning torque so that the counter turning torque ratio when the magnitude of the vehicle velocity is smaller than a fourth threshold is larger than the counter turning torque ratio when the magnitude of the vehicle velocity is larger than the fourth threshold.

According to this configuration, when the magnitude of the vehicle velocity is smaller than the fourth threshold, the magnitude of the target turning torque, which is a counter torque, is larger as compared to when the magnitude of the vehicle velocity is larger than the fourth threshold. Therefore, when the magnitude of the vehicle velocity is smaller, it is possible to suppress delayed change in the lean angle of the vehicle body.

It should be noted that the techniques disclosed in this specification can be realized in a variety of aspects, for example, a vehicle, a vehicle controller, a vehicle control method, etc.

Brief Description of the Drawings

Fig. 1 is a right side view of a vehicle 10;
Fig. 2 is a top view of the vehicle 10;
Fig. 3 is a bottom view of the vehicle 10;
Fig. 4 is a rear view of the vehicle 10;

Fig. 5(A) and (B) is simplified rear views of the vehicle 10;
Fig. 6(A) and (B) is simplified rear views of the vehicle 10;
Fig. 7 is an explanatory diagram showing a balance of forces during turning;
Fig. 8 is an explanatory diagram showing a simplified relationship between a wheel angle AF and a turning radius R;
Fig. 9 is an explanatory diagram illustrating forces which act on a rotating front wheel 12F;
Fig. 10 is a block diagram showing a configuration relating to control of the vehicle 10;
Fig. 11 is a flowchart showing an example control process;
Fig. 12 is a block diagram showing a controller 100;
Fig. 13 is a flowchart showing an example process of a first control;
Fig. 14 (A)-(D) shows explanatory diagrams of turning torque and lean torque;
Fig. 15 is a perspective view of the front wheel 12F;
Fig. 16(A), (B) is a graph showing an example relationship between the velocity V and lean angle difference dT and the first P gain Kp1, and (C) is a graph showing an example of target turning torque TqTt; and
Fig. 17 is a graph showing an example relationship between the lean angle difference dT and the second P gain Kp2.

Detailed Description of the Invention

A1. Configuration of Vehicle 10:

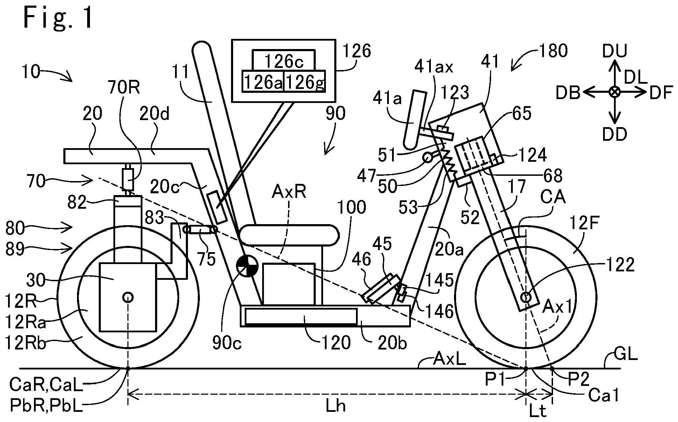

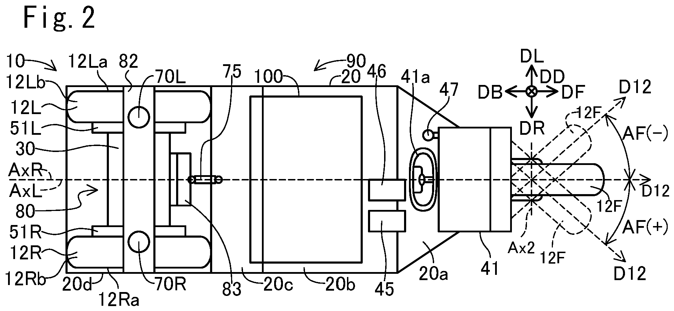

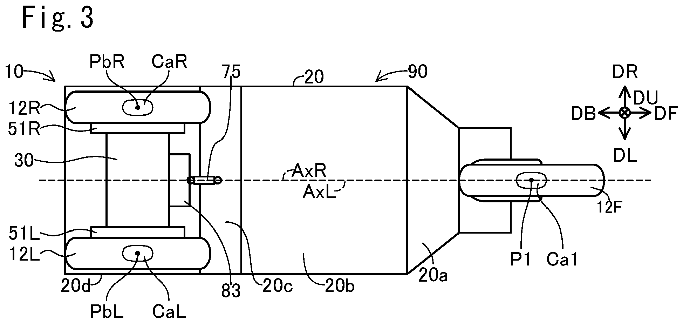

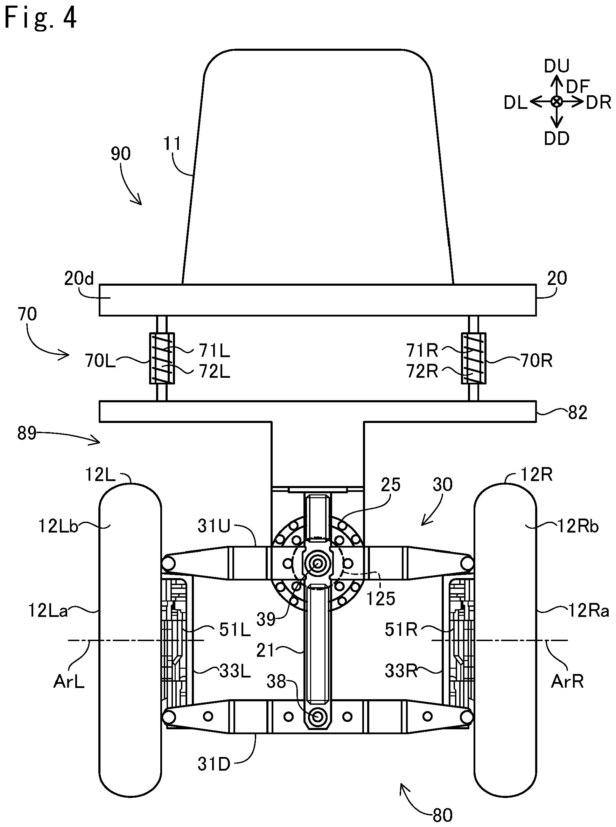

Figs. 1-4 show explanatory diagrams which illustrate a vehicle 10 as one embodiment. Fig. 1 shows a right side view of the vehicle 10, Fig. 2 shows a top view of the vehicle 10, Fig. 3 shows a bottom view of the vehicle 10, and Fig. 4 shows a rear view of the vehicle 10. In Figs. 1-4, the vehicle 10 is shown that is located on a horizontal ground GL (Fig. 1), and thus does not lean. In Figs. 2-4, only the components for use in illustration are shown that are included in the vehicle 10 configuration shown in Fig. 1, and the remaining components are omitted. In Figs. 1-4, six directions DF, DB, DU, DD, DR, and DL are shown. The front direction DF is a direction of forward movement of the vehicle 10, and the back direction DB is opposite to the front direction DF. The upward direction DU is a vertically upward direction, and the downward direction DD is opposite to the upward direction DU. The right direction DR is a right direction viewed from the vehicle 10 traveling in the front direction DF, and the left direction DL is opposite to the right direction DR. All the directions DF, DB, DR, and DL are horizontal directions. The right and left directions DR and DL are perpendicular to the front direction DF.
In this embodiment, this vehicle 10 is a small single-seater vehicle. The vehicle 10 (Figs. 1 and 2) is a tricycle which includes a vehicle body 90, a single front wheel 12F, and two rear wheels 12L and 12R. The front wheel 12F, which is an example turn wheel turnable to right and left, and is located at the center of the vehicle 10 in its width direction (i.e. a direction parallel to the right direction DR). The rear wheels 12L, 12R are drive wheels, and are spaced apart from each other symmetrically with regard to the center of the vehicle 10 in its width direction.
The vehicle body 90 (Fig. 1) has a main body 20. The main body 20 has a front portion 20a, a bottom portion 20b, a rear portion 20c, and a support portion 20d. The bottom portion 20b is a horizontal plate-like portion. The front portion 20a is a plate-like portion which extends from the end of the bottom portion 20b in the front direction DF side toward the upward direction DU side. The rear portion 20c is a plate-like portion which extends from the end of the bottom portion 20b in the back direction DB side toward the upward direction DU side. The support portion 20d is a plate-like portion which extends from the top of the rear portion 20c toward the back direction DB. For example, the main body 20 has a metal frame, and panels attached to the frame.
The vehicle body 90 further includes a seat 11 attached onto the bottom portion 20b, an accelerator pedal 45 and a brake pedal 46 located on the front direction DF side of the seat 11, a controller 100 attached onto the bottom portion 20b, a battery 120, a front wheel support device 41 attached to the end in the upward direction DU side of the front portion 20a, and a shift switch 47 attached to the front wheel support device 41. Other members (e.g. roof, headlight, etc.) may be attached to the main body 20 although they are not shown in the figures. The vehicle body 90 includes the members attached to the main body 20.
The shift switch 47 is a switch for selecting a driving mode of the vehicle 10. In this embodiment, it is possible to select a mode from among four driving modes, "drive," "neutral," "reverse," and "parking." The "drive" mode is a mode for moving forward by driving the drive wheels 12L, 12R, the "neutral" mode is a mode in which the drive wheels 12L, 12R can rotate freely, the "reverse" mode is a mode for moving backward by driving the drive wheels 12L, 12R, the "parking" mode is a mode in which at least one wheel (e.g. rear wheels 12L, 12R) cannot rotate. The "drive" and "neutral" modes are typically used when the vehicle 10 moves forward.
The front wheel support device 41 (Fig. 1) is a device that supports the front wheel 12F turnably about a turning axis Ax1. The front wheel support device 41 includes a front fork 17, a bearing 68, and a steering motor 65. For example, the front fork 17, which rotatably supports the front wheel 12F, is a telescopic fork with a built-in suspension (coil spring and shock absorber). The bearing 68 couples the main body 20 (in this example, the front portion 20a) and the front fork 17. The bearing 68 supports the front fork 17 (and thus the front wheel 12F) turnably about the turning axis Ax1 to right and left relative to the body 90. The steering motor 65 is an electric motor as an example actuator for turning the front fork 17. The steering motor 65 includes a rotor and a stator (not shown). One of the rotor or stator is attached to the front fork 17, and the other is attached to the main body 20 (the front portion 20a, in this case).

The vehicle 10 is equipped with a steering wheel 41a that is rotatable to right and left. The steering wheel 41a is an example operation input unit that is configured to be handled to input a turning direction and a degree of turn. The rotational direction of the steering wheel 41a (right or left) relative to a predetermined straight movement direction represents a turning direction desired by the user. The rotational angle of the steering wheel 41a relative to the straight movement direction (hereinafter sometimes referred to as "steering wheel angle") represents a degree of turn desired by the user. In this embodiment, "steering wheel angle = 0" indicates straight movement, "steering wheel angle > 0" indicates a right turn, and "steering wheel angle < 0" indicates a left turn. In this manner, the positive and negative signs of steering wheel angle represent the turning direction. The absolute value of steering wheel angle represents the degree of turn. Such a steering wheel angle is an example operation amount that represents the turning direction and the degree of turn input to the steering wheel 41a.

In this embodiment, secured to the steering wheel 41a is a supporting rod 41ax which extends along the rotational axis of the steering wheel 41a. The supporting rod 41ax is coupled to the front wheel support device 41 rotatably about its rotational axis.

The wheel angle AF (Fig. 2) is an angle with respect to the front direction DF of a moving direction D12 in which the front wheel 12F rolls when the vehicle 10 is viewed in the downward direction DD. The moving direction D12 is perpendicular to the rotational axis Ax2 of the front wheel 12F. In this embodiment, "AF=0" indicates that "direction D12=front direction DF." "AF>0" indicates that the direction D12 turns toward the right direction DR side (i.e. turning direction = right direction DR). "AF<0" indicates that the direction D12 turns toward the left direction DL side (i.e. turning direction = left direction DL).

The steering motor 65 is controlled by the controller 100 (Fig. 1). Hereinafter, the torque generated by the steering motor 65 may be referred to as turning torque. When the turning torque is smaller, the direction D12 of the front wheel 12F is allowed to turn to right and left independently of the steering wheel angle. The steering motor 65 will be discussed in detail later.

An angle CA shown in Fig. 1 indicates an angle between the vertically upward direction DU and a direction along the turning axis Ax1 toward the vertically upward direction DU side (sometimes referred to as caster angle). In this embodiment, the caster angle CA is larger than zero. If the caster angle CA is larger than zero, the direction along the turning axis Ax1 toward the vertically upward direction DU side is tilted diagonally backward.

Also, as shown in Fig. 1, in this embodiment, the intersection point P2 between the turning axis Ax1 of the front wheel support device 41 and the ground GL is located on the front direction DF side of the contact center P1 of the front wheel 12F with the ground GL. The distance Lt in the back direction DB between these points PI, P2 is referred to as a trail. A positive trail Lt indicates that the contact center PI is located on the back direction DB side of the intersection point P2. As shown in Figs. 1 and 3, the contact center PI represents a center of contact area Ca1 between the front wheel 12F and the ground GL. The center of contact area is a gravity center of contact area, and more specifically is a position of gravity center on the assumption that the mass is distributed evenly across the area. A contact center PbR of contact area CaR between the right rear wheel 12R and the ground GL, and a contact center PbL of contact area CaL between the left rear wheel 12L and the ground GL are identified in a similar manner.

The two rear wheels 12L, 12R (Fig. 4) are rotatably supported by a rear wheel support 80. The rear wheel support 80 includes a link mechanism 30, a lean motor 25 mounted on the top of the link mechanism 30, a first support portion 82 attached onto the top of the link mechanism 30, and a second support portion 83 attached to the front of the link mechanism 30 (Fig. 1). In Fig. 1, for purposes of illustration, portions of the link mechanism 30, first support portion 82, and second support portion 83 which are hidden by the right rear wheel 12R are also depicted in solid lines. In Fig. 2, for purposes of illustration, the rear wheel support 80, rear wheels 12L, 12R, and connector rod 75 which are hidden by the main body 20 are depicted in solid lines. In Figs. 1-3, the link mechanism 30 is depicted simply.

The first support portion 82 (Fig. 4) includes a plate-like section which extends parallel to the right direction DR on the upward direction DU side of the rear wheels 12L, 12R. The second support portion 83 (Fig. 1, Fig. 2) is located on the front direction DF side of the link mechanism 30 between the left rear wheel 12L and the right rear wheel 12R.

The right rear wheel 12R (Fig. 1) includes a wheel 12Ra, and a tire 12Rb mounted on the wheel 12Ra. The wheel 12Ra (Fig. 4) is connected to a right electric motor 51R. The right electric motor 51R has a stator and a rotor (not shown). One of the rotor or stator is attached to the wheel 12Ra, and the other is attached to the rear wheel support 80. The rotational axis of the right electric motor 51R is the same as that of the wheel 12Ra, and is parallel to the right direction DR. The configuration of the left rear wheel 12L is similar to that of the right rear wheel 12R. Specifically, the left rear wheel 12L has a wheel 12La and a tire 12Lb. One of the rotor or stator of the left electric motor 51L is attached to the wheel 12La, and the other is attached to the rear wheel support 80. These electric motors 51L, 51R are in-wheel motors which directly drive the rear wheels 12L, 12R.

Figs. 1 and 4 show a state where the vehicle body 90 does not lean but stands upright on the horizontal ground GL (that is, a state where a lean angle T described later is equal to zero). In this state, a rotational axis ArL (Fig. 4) of the left rear wheel 12L and a rotational axis ArR of the right rear wheel 12R are aligned on a same line. As shown in Figs. 1 and 3, the contact center PbR between the right rear wheel 12R and the ground GL, and the contact center PbL between the left rear wheel 12L and the ground GL are located at approximately the same position in the front direction DF.

The link mechanism 30 (Fig. 4) is a so-called parallel linkage. The link mechanism 30 includes three longitudinal link members 33L, 21, 33R arranged in order toward the right direction DR, and two lateral link members 31U, 31D arranged in order toward the downward direction DD. When the vehicle body 90 stands upright without leaning on the horizontal ground GL, the longitudinal link members 33L, 21, 33R are parallel to the vertical direction, and the lateral link members 31U, 31D are parallel to the horizontal direction. The two longitudinal link members 33L, 33R, and the two lateral link members 31U, 31D form a parallelogram link mechanism. The upper lateral link member 31U couples the upper ends of the longitudinal link members 33L, 33R. The lower lateral link member 31D couples the lower ends of the longitudinal link members 33L, 33R. The center longitudinal link member 21 couples the centers of the lateral link members 31U, 31D. These link members 33L, 33R, 31U, 31D, 21 are mutually coupled rotatably, and their rotational axes are parallel to the front direction DF. The left electric motor 51L is attached to the left longitudinal link member 33L. The right electric motor 51R is attached to the right longitudinal link member 33R. On the top of the center longitudinal link member 21, the first support portion 82 and second support portion 83 (Fig. 1) are secured. The link members 33L, 21, 33R, 31U, 31D, and the support portions 82, 83 are, for example, made from metal.

In this embodiment, the link mechanism 30 has bearings for rotatably coupling link members. For example, a bearing 38 rotatably couples the lower lateral link member 31D to the center longitudinal link member 21, and a bearing 39 rotatably couples the upper lateral link member 31U to the center longitudinal link member 21. Other portions rotatably coupling link members are also provided with bearings although they are not specifically described here.

The lean motor 25, which is an example actuator for actuating the link mechanism 30, is an electric motor having a stator and a rotor, in this embodiment. One of the stator or rotor of the lean motor 25 is secured to the center longitudinal link member 21, and the other is secured to the upper lateral link member 31U. The rotational axis of the lean motor 25 is the same as that of the bearing 39, and is located at the center of the vehicle 10 in its width direction. When the rotor of the lean motor 25 rotates relative to the stator, the upper lateral link member 31U is tilted with respect to the center longitudinal link member 21. This causes the vehicle 10 to lean. Hereinafter, the torque generated by the lean motor 25 may be referred to as lean torque. The lean torque is for controlling the lean angle of the vehicle body 90.

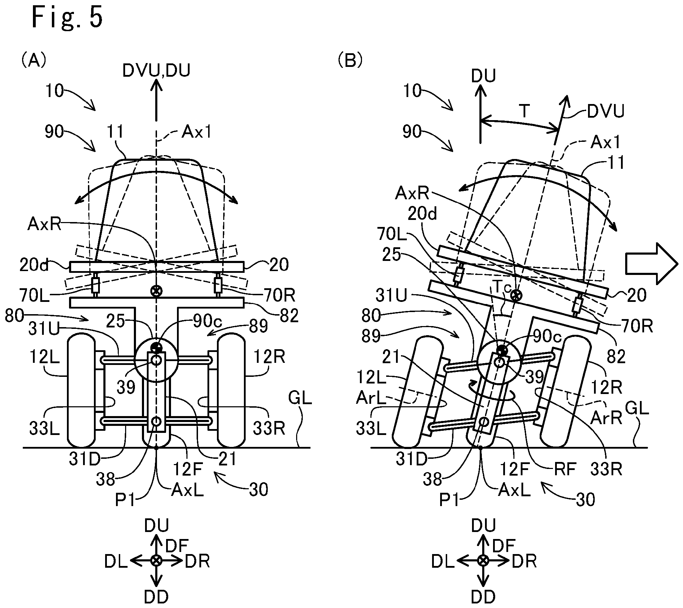

Fig. 5(A), Fig. 5(B) show schematic diagrams of the states of the vehicle 10 on the horizontal ground GL. These figures show simplified rear views of the vehicle 10. Fig. 5(A) shows the state in which the vehicle 10 stands upright while Fig. 5(B) shows the state in which the vehicle 10 leans. As shown in Fig. 5(A), when the upper lateral link member 31U is perpendicular to the center longitudinal link member 21, all of the wheels 12F, 12L, 12R stand upright relative to the horizontal ground GL. Also, the whole vehicle 10 including the vehicle body 90 stands upright relative to the ground GL. A vehicle upward direction DVU in the figure represents the upward direction of the vehicle 10. With the vehicle 10 not leaning, the vehicle upward direction DVU is the same as the upward direction DU. In this embodiment, an upward direction predetermined for the vehicle body 90 is used as the vehicle upward direction.

As shown in the rear view of Fig. 5(B), when the center longitudinal link member 21 rotates clockwise relative to the upper lateral link member 31U, the right rear wheel 12R moves toward the vehicle upward direction DVU side while the left rear wheel 12L moves toward the opposite direction side. As a result, these wheels 12F, 12L, 12R lean to the right direction DR side relative to the ground GL while all of the wheels 12F, 12L, 12R have contact with the ground GL. Also, the whole vehicle 10 including the vehicle body 90 leans to the right direction DR side relative to the ground GL. In general, when the upper lateral link member 31U is tilted relative to the center longitudinal link member 21, one of the right rear wheel 12R or left rear wheel 12L moves in the vehicle upward direction DVU side while the other moves in an opposite direction side to the vehicle upward direction DVU That is, the link mechanism 30 and the lean motor 25 change the relative position in a direction perpendicular to the rotational axes ArL, ArR of the wheels 12L, 12R, between the pair of wheels 12L, 12R spaced apart from each other in the width direction. As a result, the wheels 12F, 12L, 12R, and thus the whole vehicle 10 including the vehicle body 90 lean relative to the ground GL. As described later, when the vehicle 10 turns to the right direction DR side, the vehicle 10 leans to the right direction DR side. When the vehicle 10 turns to the left direction DL side, the vehicle 10 leans to the left direction DL side.

In Fig. 5(B), the vehicle upward direction DVU is tilted in the right direction DR side relative to the upward direction DU. Hereinafter, when the vehicle 10 is viewed in the front direction DF, the angle between the upward direction DU and the vehicle upward direction DVU is referred to as lean angle T. Where "T>0" indicates a lean to the right direction DR side while "T<0" indicates a lean to the left direction DL side. When the vehicle 10 leans, the whole vehicle 10 including the vehicle body 90 leans to substantially the same direction. Therefore, the lean angle T of the vehicle body 90 can be considered as the lean angle T of the vehicle 10.

A control angle Tc of the link mechanism 30 is also shown in Fig. 5(B). The control angle Tc represents an angle between the orientations of the upper lateral link member 31U and center longitudinal link member 21. "Tc=0" indicates that the center longitudinal link member 21 is perpendicular to the upper lateral link member 31U. "Tc>0" indicates that the center longitudinal link member 21 rotates clockwise relative to the upper lateral link member 31U, as shown in the rear view of Fig. 5(B). "Tc<0" indicates that the center longitudinal link member 21 rotates counterclockwise relative to the upper lateral link member 31U although this state is not illustrated. As shown, the control angle Tc is approximately the same as the lean angle T when the vehicle 10 is located on the horizontal ground GL (i.e. the ground GL perpendicular to the vertically upward direction DU).

As shown in Fig. 5(A) and (B), a lean axis AxL is located on the ground GL. The link mechanism 30 and the lean motor 25 can cause the vehicle 10 to lean to right and left about the lean axis AxL. In this embodiment, the lean axis AxL is a straight line which passes through a contact center PI between the front wheel 12F and the ground GL, and which is parallel to the front direction DF. The link mechanism 30 for rotatably supporting the rear wheels 12L, 12R, and the lean motor 25 constitute a lean device 89 configured to lean the vehicle body 90 in the width direction of the vehicle 10.

The lateral link member 31U is connected via the longitudinal link members 33L, 33R and the motors 51L, 51R to the wheels 12L, 12R. The center longitudinal link member 21 is connected via the first support portion 82 and a suspension system 70 (described later) to the vehicle body 90. The lean motor 25 applies to the members 31U and 21 a force that changes the relative position between the member 31U connected to the wheels 12L, 12R and the member 21 connected to the vehicle body 90 (in this case, a torque that changes the orientation of the member 21 relative to the member 31U).

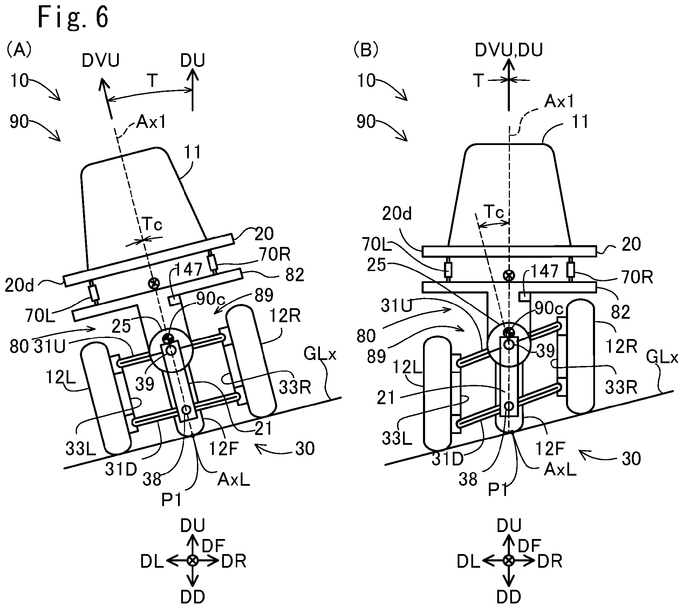

Fig. 6(A), Fig. 6(B) show simplified rear views of the vehicle 10 similarly to Fig. 5(A), Fig. 5(B). In Fig. 6(A), Fig. 6(B), the ground GLx is inclined relative to the vertically upward direction DU (higher on the right side, and lower on the left side). Fig. 6(A) shows a state where the control angle Tc is equal to zero. In this state, all of the wheels 12F, 12L, 12R stand upright relative to the ground GLx. And, the vehicle upward direction DVU is perpendicular to the ground GLx, and is tilted in the left direction DL side relative to the vertically upward direction DU.

Fig. 6(B) shows a state where the lean angle T is equal to zero. In this state, the upper lateral link member 31U is approximately parallel to the ground GLx, and is tilted counterclockwise relative to the center longitudinal link member 21. The wheels 12F, 12L, 12R is tilted relative to the ground GL.

In this manner, when the ground GLx is inclined, the magnitude of the lean angle T of the vehicle body 90 can differ from that of the control angle Tc of the link mechanism 30.

The lean motor 25 has a lock mechanism (not shown) for unrotatably locking the lean motor 25. By operating the lock mechanism, the upper lateral link member 31U is unrotatably locked relative to the center longitudinal link member 21. As a result, the control angle Tc is fixed. For example, the control angle Tc is fixed to zero when the vehicle 10 is parked. Preferably, the lock mechanism is a mechanical mechanism which consumes no electric power when locking the lean motor 25 (and thus the link mechanism 30).

In this embodiment, the main body 20 is coupled to the rear wheel support 80 via the suspension system 70 and the connector rod 75, as shown in Figs. 2 and 4. The suspension system 70 (Fig. 4) has a left suspension 70L and right suspension 70R that can extend and retract. In this embodiment, each suspension 70L, 70R is a telescopic suspension with built-in coil spring 71L, 71R and shock absorber 72L, 72R. The ends of the suspensions 70L, 70R on the upward direction DU side are rotatably coupled to the support portion 20d of the main body 20 (e.g. via a ball-and-socket joint, hinge, etc.). The ends of the suspensions 70L, 70R on the downward direction DD side are rotatably coupled to the first support portion 82 of the rear wheel support 80 (e.g. via a ball-and-socket joint, hinge, etc.).

The connector rod 75 is a rod which extends in the front direction DF as shown in Figs. 1 and 2. The connector rod 75 is located at the center of the vehicle 10 in its width direction. The end of the connector rod 75 on the front direction DF side is rotatably coupled to the rear portion 20c of the main body 20 (e.g. via a ball-and-socket joint). The end of the connector rod 75 on the back direction DB side is rotatably coupled to the second support portion 83 of the rear wheel support 80 (e.g. via a ball-and-socket joint).

In this manner, the main body 20 (and thus the vehicle body 90) is coupled to the rear wheel support 80 via the suspension system 70 and the connector rod 75. The vehicle body 90 can rotate in its width direction through the extension/retraction of the suspensions 70L, 70R. The roll axis AxR of Fig. 1 represents a central axis about which the vehicle body 90 rotates relative to the rear wheel support 80 in the right direction DR and left direction DL. In this embodiment, the roll axis AxR is a straight line which passes through the contact center PI between the front wheel 12F and the ground GL, and through the vicinity of the connector rod 75. It should be noted that in this embodiment, the lean axis AxL about which leaning occurs through the lean device 89 is different form the roll axis AxR.

In Fig. 5(A) and (B), the vehicle body 90 which rotates about the roll axis AxR is shown in dotted lines. The roll axis AxR in this figure represents a location of the roll axis AxR on a plane which includes the suspensions 70L, 70R, and which is perpendicular to the front direction DF. As shown in Fig. 5(B), the vehicle body 90 can also rotate about the roll axis AxR to the right direction DR and to the left direction DL even when the vehicle 10 leans.

The vehicle body 90 can rotate in the width direction of the vehicle 10 relative to the vertically upward direction DU (and thus the ground GL) through a rotation by the rear wheel support 80 and a rotation by the suspension system 70 and connector rod 75. The rotation of the vehicle body 90 in its width direction achieved in an integrated manner in the overall vehicle 10 may be referred to as roll. A roll can be also caused by a deformation of the members of the vehicle 10, such as the vehicle body 90 and the tires 12Rb, 12Lb. It should be noted that typically, the rotation about the roll axis AxR is temporary, and its degree is smaller than that of rotation through the lean device 89.

A gravity center 90c is shown in Figs. 1, 5(A), and 5(B). This gravity center 90c is a gravity center of the vehicle body 90 under a full load condition. The full load condition means that the vehicle 10 carries an occupant (and possibly a load) so that the gross weight of the vehicle 10 becomes the acceptable gross weight. For example, no maximum loading weight may be specified, but a maximum riding capacity may be specified. In this case, the gravity center 90c is a gravity center when the vehicle 10 is filled to its maximum riding capacity. A predetermined reference body weight (e.g. 55kg) is adopted as occupant's body weight. Alternatively, a maximum loading weight may be specified in addition to a maximum riding weight. In this case, the gravity center 90c is a gravity center of the vehicle body 90 when the vehicle 10 is filled to its maximum riding capacity and maximum loading capacity.

As shown, the gravity center 90c is located on the downward direction DD side of the roll axis AxR. Therefore, if the vehicle body 90 oscillates about the roll axis AxR, an excessive increase in amplitude of oscillation can be suppressed. In this embodiment, the battery 120, which is a relatively heavy element among the elements of the vehicle body 90 (Fig. 1), is located in a lower position in order to locate the gravity center 90c on the downward direction DD side of the roll axis AxR. Specifically, the battery 120 is secured to the bottom portion 20b, which is the lowest portion among the main body 20 of the vehicle body 90. Therefore, the gravity center 90c can be easily made lower than the roll axis AxR.

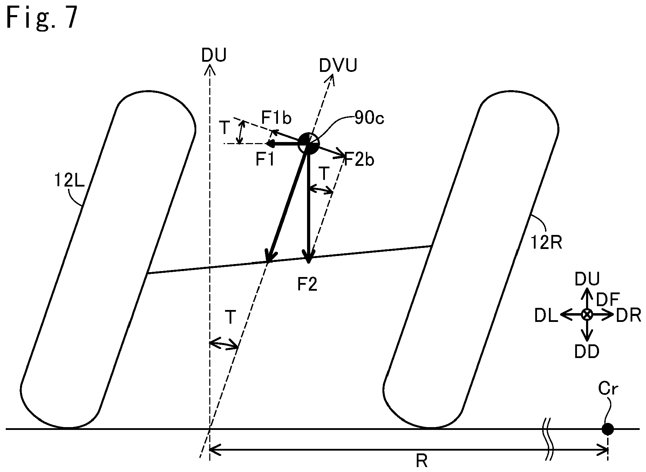

Fig. 7 shows an explanatory diagram illustrating a balance of forces during turning. This figure shows a rear view of the rear wheels 12L, 12R during turning to right. As described later, when the turning direction is the right direction, the controller 100 (Fig. 1) can control the lean motor 25 and the steering motor 65 so that the rear wheels 12L, 12R (and thus the vehicle 10) lean relative to the ground GL to the right direction DR.

A first force F1 in the figure is a centrifugal force acting on the vehicle body 90. A second force F2 is a gravity acting on the vehicle body 90. Where the mass of the vehicle body 90 is m (kg), the acceleration of gravity is g (about 9. 8m/s$^2$), the lean angle of the vehicle 10 relative to the vertical direction is T (degree), the velocity of the vehicle 10 during turning is V (m/s), and the turning radius is R (m). The first force F1 and the second force F2 are expressed in Equations 1 and 2, respectively:

$$F1 = (m*V^2)/R \quad \text{(Equation 1)}$$

$$F2 = m*g \quad \text{(Equation 2)}$$

Where * represents a multiplication sign (hereinafter the same shall apply).

In addition, a force F1b in the figure is a component of the first force F1 in a direction perpendicular to the vehicle upward direction DVU A force F2b is a component of the second force F2 in a direction perpendicular to the vehicle upward direction DVU The force F1b and the force F2b are expressed in Equations 3 and 4, respectively:

$$F1b = F1*\cos(T) \quad \text{(Equation 3)}$$

$$F2b = F2*\sin(T) \quad \text{(Equation 4)}$$

Where "cos()" is a cosine function, and "sin()" is a sine function (hereinafter the same shall apply).

The force F1b is a component which causes the vehicle upward direction DVU to be rotated to the left direction DL side while the force F2b is a component which causes the vehicle upward direction DVU to be rotated to the right direction DR side. When the vehicle 10 continues to turn stably with the lean angle T (and furthermore the velocity V and turning radius R) maintained, the relationship between F1b and F2b is expressed in the following equation 5:

$$F1b = F2b \quad \text{(Equation 5)}$$

By substituting Equations 1-4 as discussed above into Equation 5, the turning radius R is expressed in Equation 6:

$$R = V^2/(g*\tan(T)) \qquad \text{(Equation 6)}$$

Where "tan()" is a tangent function (hereinafter the same shall apply).

Equation 6 is established independently of the mass m of the vehicle body 90. Equation 6a below, which is obtained by substituting "T" in Equation 6 with a parameter Ta (in this case, absolute value of lean angle T) representing the magnitude of the lean angle without distinction between the right and left directions, is true regardless of the lean direction of the vehicle body 90:

$$R = V^2/(g*\tan(Ta)) \qquad \text{(Equation 6a)}$$

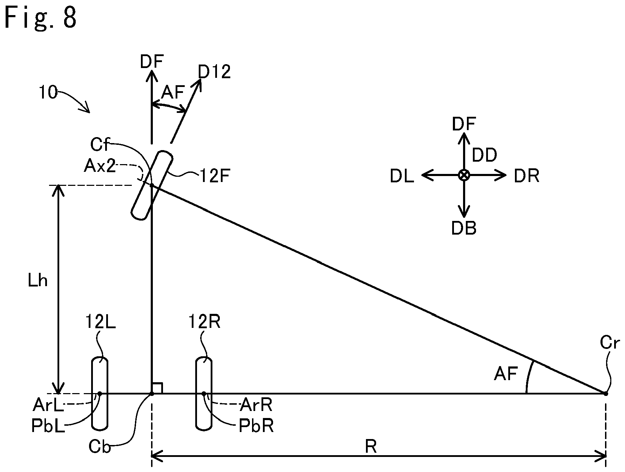

Fig. 8 is an explanatory diagram showing a simplified relationship between the wheel angle AF and the turning radius R. This figure shows the wheels 12F, 12L, 12R viewed in the downward direction DD. In the figure, the front wheel 12F turns to the right direction DR, and thus the vehicle 10 turns to the right direction DR. A front center Cf in the figure is the center of the front wheel 12F. The front center Cf is located on the rotational axis Ax2 of the front wheel 12F. The front center Cf is located at approximately the same position as the contact center PI (Fig. 1) when the vehicle 10 is viewed in the downward direction DD. A rear center Cb is the center between the two rear wheels 12L, 12R. The rear center Cb is located at the middle between the rear wheels 12L, 12R on the rotational axes ArL, ArR of the rear wheels 12L , 12R when the vehicle body 90 does not lean. The rear center Cb has the same location as a midpoint between the contact centers PbL, PbR of the two rear wheels 12L, 12R when the vehicle 10 is viewed in the downward direction DD. A center Cr is the turning center (referred to as turning center Cr). A wheelbase Lh is the distance between the front center Cf and the rear center Cb in the front direction DF. As shown in Fig. 1, the wheelbase Lh is the distance between the rotational axis Ax2 of the front wheel 12F and the rotational axes ArL, ArR of the rear wheels 12L, 12R in the front direction DF.

As shown in Fig. 8, the front center Cf, rear center Cb, and turning center Cr form a right angled triangle. The internal angle of the vertex Cb is 90 degrees. The internal angle of the vertex Cr is equal to the wheel angle AF. Therefore, the relationship between the wheel angle AF and the turning radius R is expressed in Equation 7:

$$AF = \arctan(Lh/R) \qquad \text{(Equation 7)}$$

Where "arctan()" is an inverse function of tangent function (hereinafter the same shall apply).

It should be noted that there are a variety of difference between the actual behavior of the vehicle 10 and the simplified behavior in Fig. 8. For example, the actual wheels 12F, 12L, 12R can slip relative to the ground GL. In addition, the actual front wheel 12F and rear wheels 12L, 12R lean. Therefore, the actual turning radius may be different from the turning radius R in Equation 7. However, Equation 7 can be used as a good approximate equation which represents the relationship between the wheel angle Af and the turning radius R.

When the vehicle 10 leans to the right direction DR side during its forward movement as shown in Fig. 5(B), the gravity center 90c of the vehicle body 90 moves to the right direction DR side, and thus the traveling direction of the vehicle 10 changes to the right direction DR side. The front wheel support device 41 (Fig. 1)(and thus the turning axis Ax1 (Fig. 5(B))) also moves to the right direction DR side. On the other hand, the contact center PI between the front wheel 12F and the ground GL cannot readily move to the right direction DR side due to friction. And, in this embodiment, the wheel 12F has a positive trail Lt as described with regard to Fig. 1. That is, the contact center PI is located on the back direction DB side of the intersection point P2 between the turning axis Ax1 and the ground GL. As a result, when the vehicle 10 leans to the right direction DR side during its forward movement, the orientation of the front wheel 12F (i.e. moving direction D12 (Fig. 2)) can spontaneously turn to the new traveling direction of the vehicle 10, that is, its lean direction (right direction DR in the example of Fig. 5(B)). A turning direction RF in Fig. 5(B) represents a turning direction of the front wheel 12F about the turning axis Ax1 when the vehicle body 90 leans to the right direction DR side. When the torque of the steering motor 65 is smaller, the orientation of the front wheel 12F spontaneously turns to the lean direction following beginning of change in the lean angle T. Thus, the vehicle 10 turns toward the lean direction.

In addition, the behavioral stability of the vehicle 10 is improved because the forces F1b, F2b (Fig. 7, Equation 5) balance each other when the turning radius is equal to the turning radius R expressed in Equation 6 (and thus Equation 6a) discussed above. The vehicle 10 turning at the lean angle T will turn in the turning radius R expressed in Equation 6. In addition, the moving direction D12 of the front wheel 12F spontaneously faces the traveling direction of the vehicle 10 because the vehicle 10 has a positive trail Lt. Therefore, when the vehicle 10 turns at the lean angle T, the orientation of the front wheel 12F (i.e. wheel angle AF) can settle at an orientation of the wheel angle AF determined based on the turning radius R expressed in Equation 6, and Equation 7. In this manner, the wheel angle AF changes following a lean of the vehicle body 90.

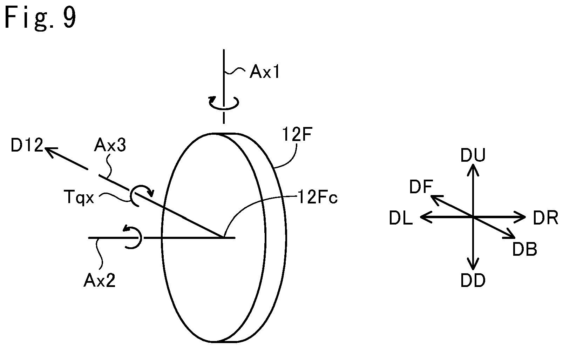

Furthermore, in this embodiment, when the vehicle body 90 leans, the front wheel 12F is subject to a force that rotates the wheel angle AF to the lean direction independently of the trail Lt. Fig. 9 is an explanatory diagram illustrating forces which act on the rotating front wheel 12F. This figure shows a perspective view of the front wheel 12F. In the example of Fig. 9, the direction D12 of the front wheel 12F is the same as the front direction DF. A rotational axis Ax2 is a rotational axis of the front wheel 12F. When the vehicle 10 moves forward, the front wheel 12F rotates about this rotational axis Ax2. The figure shows the turning axis Ax1 of the front wheel support device 41 (Fig. 1) and a front axis Ax3. The turning axis Ax1 extends from the upward direction DU side to the downward direction DD side. The front axis Ax3 is an axis which passes through the gravity center 12Fc of the front wheel 12F and is parallel to the direction D12 of the front wheel 12F. It should be noted that the rotational axis Ax2 of the front wheel 12F also passes through the gravity center 12Fc of the front wheel 12F.

In this embodiment, the front wheel support device 41 is secured to the vehicle body 90. Therefore, when the vehicle body 90 leans, the front wheel support device 41 leans along with the vehicle body 90, and thus the rotational axis Ax2 of the front wheel 12F will also lean to the same direction in a similar fashion. When the vehicle body 90 of the moving vehicle 10 leans to the right direction DR side, the front wheel 12F, which rotates about the rotational axis Ax2, is subject to a torque Tqx that causes the front wheel 12F to lean to the right direction DR side. This torque Tqx includes a component of force that acts to lean the front wheel 12F about the front axis Ax3 to the the right direction DR. Such a movement of a rotating object when an external torque is applied to the object is known as precession movement. For example, the rotating object turns about an axis perpendicular to the rotational axis and the axis of the external torque. In the example of Fig. 9, the application of the torque Tqx causes the rotating front wheel 12F to turn about the turning axis Ax1 of the front wheel support device 41 to the right direction DR side. In this manner, due to the angular momentum of the rotating front wheel 12F, the direction D12 of the front wheel 12F (i.e. wheel angle AF) changes following a lean of the vehicle body 90.

The above description refers to the case where the vehicle 10 leans to the right direction DR side. Similarly, the direction D12 of the front wheel 12F (i.e. wheel angle AF) turns to the left direction DL side following the lean of the vehicle body 90 when the vehicle 10 leans to the left direction DL side.

When the torque of the steering motor 65 is smaller, the front wheel support device 41 supports the front wheel 12F as follows. That is, the front wheel 12F can turn to right and left relative to the vehicle body 90 following a change in lean of the vehicle body 90 independently of information input to the steering wheel 41a. For example, even if the steering wheel 41a is maintained in the predetermined direction corresponding to the straight movement, the front wheel 12F can turn to right following a change in the lean angle T when the lean angle T of the vehicle body 90 changes toward right (i.e. the wheel angle AF can change toward right). The front wheel support device 41 supporting the front wheel 12F in this manner may be restated as follows. That is, the front wheel support device 41 supports the front wheel 12F turnably to right and left relative to the vehicle body 90 following a change in lean of the vehicle body 90 so that the wheel angle AF of the front wheel 12F for a single operation amount input to the steering wheel 41a is not restricted to a single wheel angle AF.

As shown in Fig. 1, the front wheel support device 41 has a connection 50 which connects the supporting rod 41ax of the steering wheel 41a to the front fork 17. The connection 50 includes a first portion 51 secured to the supporting rod 41ax, a second portion 52 secured to the front fork 17, and a third portion 53 which connects the first portion 51 and the second portion 52. The connection 50 is connected indirectly to the steering wheel 41a via the supporting rod 41ax, and is connected directly to the front fork 17. The third portion 53 in this embodiment is a viscous damper. When the orientation of the front fork 17 (and thus front wheel 12F) relative to that of the steering wheel 41a changes rapidly, the connection 50 applies a force suppressing the change to the steering wheel 41a and the front fork 17. When the torque of the steering motor 65 is smaller, the direction D12 of the front wheel 12F can change rapidly and unintentionally due to an external factor such as irregularities of road surface. The user can suppress the unintentional, rapid change in the direction D12 of the front wheel 12F by gripping the steering wheel 41a. This can result in improved driving stability.

In addition, the connection 50 allows a moderate change in the orientation of the front fork 17 (and thus front wheel 12F) relative to that of the steering wheel 41a. In this manner, the connection 50 connects loosely the steering wheel 41a and the front fork 17. Such a connection 50 allows the front wheel 12F to turn to right and left relative to the vehicle body 90 following a change in lean of the vehicle body 90 independently of the steering wheel angle input to the steering wheel 41a when the torque of the steering motor 65 is smaller. Therefore, the driving stability is improved because the wheel angle AF can change to an angle appropriate for the lean angle T.

A2. Control of Vehicle 10:

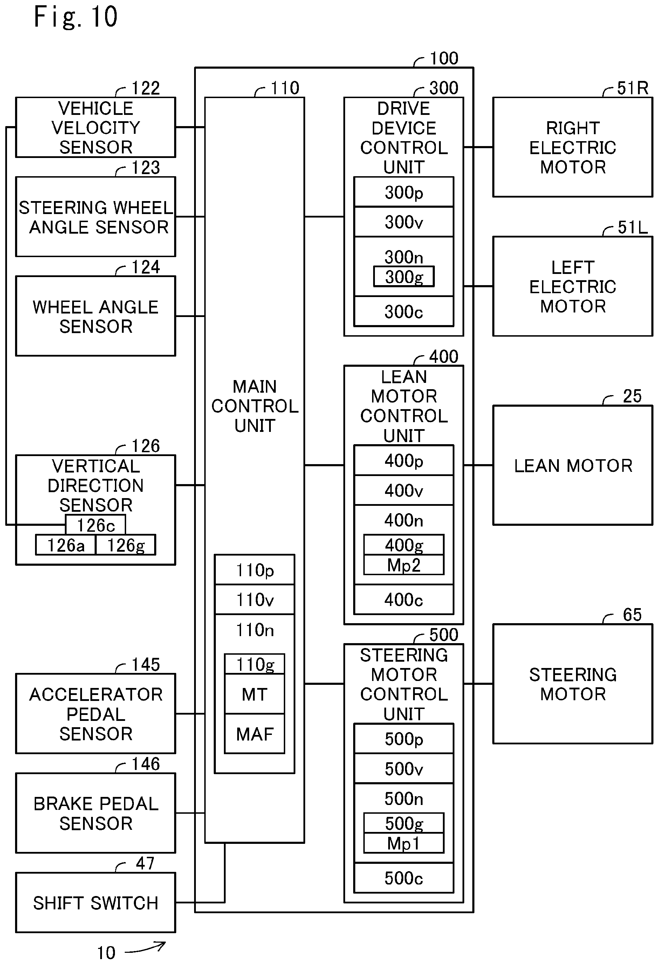

Fig. 10 is a block diagram showing the configuration relating to control of the vehicle 10. The vehicle 10 includes, as components for the control, a vehicle velocity sensor 122, a steering wheel angle sensor 123, a wheel angle sensor 124, a vertical direction sensor 126, an accelerator pedal sensor 145, a brake pedal sensor 146, a shift switch 47, a controller 100, a right electric motor 51R, a left electric motor 51L, a lean motor 25, and a steering motor 65.

The vehicle velocity sensor 122 is a sensor for detecting a vehicle velocity of the vehicle 10. In this embodiment, the vehicle velocity sensor 122 is attached on the lower end of the front fork 17 (Fig. 1) to detect a rotational rate of the front wheel 12F, i.e. vehicle velocity.

The steering wheel angle sensor 123 is a sensor for detecting an orientation of the steering wheel 41a (i.e. steering wheel angle). In this embodiment, the steering wheel angle sensor 123 is attached to the supporting rod 41ax secured to the steering wheel 41a (Fig. 1).

The wheel angle sensor 124 is a sensor for detecting a wheel angle AF of the front wheel 12F. In this embodiment, the wheel angle sensor 124 is attached to the steering motor 65 (Fig. 1).

The vertical direction sensor 126 is a sensor for determining the vertically downward direction DD. In this embodiment, the vertical direction sensor 126 includes an acceleration sensor 126a, a gyroscope sensor 126g, and a control unit 126c.

The acceleration sensor is a sensor that detects acceleration in any direction, for example, triaxial accelerometer. Hereinafter, a direction of acceleration detected by the acceleration sensor 126a will be referred to as detected direction. With the vehicle 10 stopped, the detected direction is the same as the vertically downward direction DD. That is, a direction opposite to the detected direction is the vertically upward direction DU.

The gyroscope sensor 126g is a sensor that detects angular acceleration about a rotational axis in any direction, for example, triaxial angular accelerometer.

The control unit 126c is a device that uses a signal from the acceleration sensor 126a and a signal from the gyroscope sensor 126g to determine the vertically downward direction DD. For example, the control unit 126c is a data processor including a computer.

The acceleration sensor 126a and the gyroscope sensor 126g may be secured to a variety of members of the vehicle 10. For example, the acceleration sensor 126a and the gyroscope sensor 126g are secured to the same member. In the embodiment of Fig. 1, the acceleration sensor 126a and the gyroscope sensor 126g (and thus the vertical direction sensor 126) are secured to the rear portion 20c of the main body 20.

When the vehicle 10 is moving, the detected direction can be displaced from the vertically downward direction DD in response to the movement of the vehicle 10. For example, the detected direction is displaced so that it is tilted toward the back direction DB side from the vertically downward direction DD if the vehicle 10 accelerates during its forward movement. The detected direction is displaced so that it is tilted toward the front direction DF side from the vertically downward direction DD if the vehicle 10 decelerates during its forward movement. The detected direction is displaced so that it is tilted toward the right direction DR side from the vertically downward direction DD if the vehicle 10 turns to left during its forward movement. The detected direction is displaced so that it is tilted toward the left direction DL side from the vertically downward direction DD if the vehicle 10 turns to right during its forward movement.

The control unit 126c of the vertical direction sensor 126 uses the vehicle velocity V detected by the vehicle velocity sensor 122 to calculate the acceleration of the vehicle 10. Then, the control unit 126c uses the acceleration to determine the displacement of the detected direction from the vertically downward direction DD due to the acceleration of the vehicle 10 (e.g. the displacement of the detected direction toward the front direction DF or back direction DB is determined). In addition, the control unit 126c uses the angular acceleration detected by the gyroscope sensor 126g to determine the displacement of the detected direction from the vertically downward direction DD due to the angular acceleration of the vehicle 10 (e.g. the displacement of the detected direction toward the right direction DR or left direction DL is determined). The control unit 126c uses the determined displacement to modify the detected direction, and thereby determines the vertically downward direction DD. In this manner, the vertical direction sensor 126 can determine the vertically downward direction DD properly under a variety of driving conditions of the vehicle 10.

The control unit 126c outputs vertically downward direction information indicating the determined vertically downward direction DD. The vertically downward direction information indicates the vertically downward direction DD relative to a predetermined reference direction of the vertical direction sensor 126. In this embodiment, the vertical direction sensor 126 is secured to the vehicle body 90 (more specifically, the main body 20). Accordingly, the correspondence relationship between the vehicle upward direction DVU of the vehicle body 90 and the reference direction of the vertical direction sensor 126 is predetermined (referred to as sensor direction relationship). This sensor direction relationship can be used to convert the vertically downward direction DD indicated by the vertically downward direction information to the vertically downward direction DD relative to the vehicle upward direction DVU of the vehicle body 90.

The accelerator pedal sensor 145 is attached to the accelerator pedal 45 (Fig. 1) in order to detect an accelerator operation amount. The brake pedal sensor 146 is attached to the brake pedal 46 (Fig. 1) in order to detect a brake operation amount.

Each sensor 122, 123, 124, 145, 146 is configured using a resolver or encoder, for example.

The controller 100 includes a main control unit 110, a drive device control unit 300, a lean motor control unit 400, and a steering motor control unit 500. The controller 100 operates with electric power from the battery 120 (Fig. 1).

In this embodiment, the control units 110, 300, 400, 500 each has a computer. More specifically, the control units 110, 300, 400, 500 include processors 110p, 300p, 400p, 500p (e.g. CPU), volatile memories 110v, 300v, 400v, 500v (e.g. DRAM), and non-volatile memories 110n, 300n, 400n, 500n (e.g. flash memory), respectively. The non-volatile memories store in advance programs 110g, 300g, 400g, 500g for operating the corresponding control units 110, 300, 400, 500, respectively. In addition, the non-volatile memory 110n of the main control unit 110 stores in advance map data MT, MAF. The non-volatile memory 500n of the steering motor control unit 500 stores in advance first map data Mp1. The non-volatile memory 400n of the lean motor control unit 400 stores in advance second map data Mp2. The processors 110p, 300p, 400p, 500p perform a variety of processes by executing the corresponding programs 110g, 300g, 400g, 500g, respectively.

The processor 110p of the main control unit 110 receives signals from the sensors 122, 123, 124, 126, 145, 146 and from the shift switch 47, and then controls the vehicle 10 according to the received signals. The processor 110p of the main control unit 110 controls the vehicle 10 by outputting instructions to the drive device control unit 300, the lean motor control unit 400, and the steering motor control unit 500 (described in detail later).

The processor 300p of the drive device control unit 300 controls the electric motors 51L, 51R according to the instruction from the main control unit 110. The processor 400p of the lean motor control unit 400 controls the lean motor 25 according to the instruction from the main control unit 110. The processor 500p of the steering motor control unit 500 controls the steering motor 65 according to the instruction from the main control unit 110. These control units 300, 400, 500 respectively have electric power control modules 300c, 400c, 500c which supply the motors 51L, 51R, 25, 65 under control with electric power from the battery 120. The electric power control modules 300c, 400c, 500c are configured using an electric circuit (e.g. inverter circuit).

Hereinafter, a phrase "a processor 110p, 300p, 400p, 500p of a control unit 110, 300, 400, 500 performs a process" is sometimes expressed briefly as a phrase "a control unit 110, 300, 400, 500 performs a process."

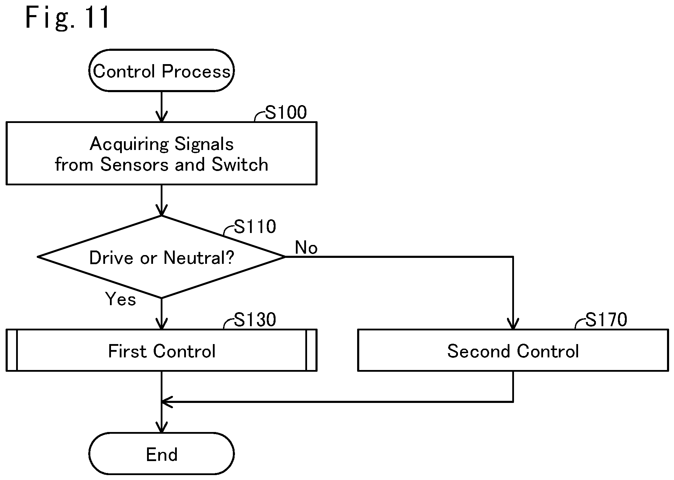

Fig. 11 is a flowchart showing an example control process performed by the controller 100 (Fig. 10). The flowchart of Fig. 11 shows a procedure for controlling the rear wheel support 80 and the front wheel support device 41. In Fig. 11, each process step has a reference number of an alphabet "S" followed by a numeral.

In S100, the main control unit 110 acquires signals from the sensors 122, 123, 124, 126, 145, 146 and from the shift switch 47. Then, the main control unit 110 determines the velocity V, steering wheel angle, wheel angle AF, vertically downward direction DD, accelerator operation amount, brake operation amount, and driving mode.

In S110, the main control unit 110 determines whether or not a condition is met that 'the driving mode is either "drive" or "neutral." The condition in S110 indicates that the vehicle 10 is moving forward. If the determination result in S110 is "Yes," the main control unit 110 proceeds to S130.

In S130, the controller 100 controls the lean motor 25 and the steering motor 65 so that the vehicle 10 moves in the direction mapped to the steering wheel angle. The outline of S130 is as follows. The main control unit 110 uses the steering wheel angle and the vehicle velocity V to determine a first target lean angle T1. The first target lean angle T1 represents a target value of the lean angle T. As described later, the absolute value of the first target lean angle T1 is increased with an increase in the absolute value of the steering wheel angle. When the vehicle body 90 is caused to rotate in its width direction so that the lean angle T approaches the first target lean angle T1, the rotational direction of the vehicle body 90 is referred to as target direction. The target direction is either right direction or left direction. The lean motor control unit 400 causes the lean motor 25 to output a lean torque in the target direction so that the lean angle T approaches the first target lean angle T1. In addition, the steering motor control unit 500 causes the steering motor 65 to output a torque for turning the front wheel 12F in a direction opposite to the target direction. Accordingly, the vehicle 10 properly moves toward the direction corresponding to the steering wheel angle. The process of S130 will be discussed in detail later.

If the driving mode is not "drive" or "neutral" (i.e. if the driving mode is either "reverse" or "parking"), the determination result in S110 is "No." Accordingly, the main control unit 110 proceeds to S170.

In S170, the main control unit 110 determines the first target lean angle T1 in a similar manner to S130. The main control unit 110 supplies the lean motor control unit 400 with an instruction for controlling the lean motor 25 so that the lean angle T is equal to the first target lean angle T1. According to the instruction, the lean motor control unit 400 actuates the lean motor 25 so that the lean angle T is equal to the first target lean angle T1. The lean motor control unit 400 performs a feedback control of the lean motor 25 which uses a difference between the lean angle T and the first target lean angle T1 (e.g. a so-called PID (Proportional Integral Derivative) control).

Also, the main control unit 110 uses the steering wheel angle and the vehicle velocity V to determine a first target wheel angle AFt1. Information which represents the correspondence between the first target wheel angle AFt1 and the steering wheel angle and vehicle velocity V is predefined by the map data MAF stored in the non-volatile memory 110n of the main control unit 110 (Fig. 10). The main control unit 110 references this map data MAF to identify the first target wheel angle AFt1 corresponding to the combination of steering wheel angle and vehicle velocity V.

In this embodiment, the correspondence between the steering wheel angle and vehicle velocity V and the first target wheel angle AFt1 is the same as that between the first target lean angle T1 and vehicle velocity V and the wheel angle AF determined using the above Equations 6, 7. Accordingly, the same first target wheel angle AFt1 can be determined using the first target lean angle T1 and the vehicle velocity V. For example, the map data MAF may define the correspondence between the combination of first target lean angle T1 and vehicle velocity V and the first target wheel angle AFt1. Then, the main control unit 110 may use the first target lean angle T1 and the vehicle velocity V to determine the first target wheel angle AFt1.

The main control unit 110 supplies the steering motor control unit 500 with an instruction for controlling the steering motor 65 so that the wheel angle AF is equal to the first target wheel angle AFt1. According to the instruction, the steering motor control unit 500 actuates the steering motor 65 so that the wheel angle AF is equal to the first target wheel angle AFt1. The steering motor control unit 500 performs a feedback control of the steering motor 65 which uses a difference between the wheel angle AF and the first target wheel angle AFt1 (e.g. a so-called PID (Proportional Integral Derivative) control).

Accordingly, the vehicle 10 properly moves toward the direction corresponding to the steering wheel angle.

In response to S130 or S170 being performed, the process of Fig. 11 ends. The controller 100 repeatedly performs the process of Fig. 11. If the condition for performing S130 is met (S110: Yes), the controller 100 continues to S130. If the condition for performing S170 is met (S110: No), the controller 100 continues to S170. As a result, the vehicle 10 moves toward a traveling direction appropriate to the steering wheel angle.

The main control unit 110 (Fig. 10) and the drive device control unit 300 serve as a drive control unit for controlling the electric motors 51L, 51R according to the accelerator operation amount and brake operation amount although not illustrated. In this embodiment, the main control unit 110 supplies the drive device control unit 300 with an instruction for increasing output power of the electric motors 51L, 51R when the accelerator operation amount is increased. According to the instruction, the drive device control unit 300 controls the electric motors 51L, 51R so as to increase their output power. The main control unit 110 supplies the drive device control unit 300 with an instruction for decreasing output power of the electric motors 51L, 51R when the accelerator operation amount is decreased. According to the instruction, the drive device control unit 300 controls the electric motors 51L, 51R so as to decrease their output power.

The main control unit 110 supplies the drive device control unit 300 with an instruction for decreasing output power of the electric motors 51L, 51R when the brake operation amount becomes larger than zero. According to the instruction, the drive device control unit 300 controls the electric motors 51L, 51R so as to decrease their output power. It should be noted that the vehicle 10 preferably has a brake device which frictionally reduces rotational rate of at least one of all the wheels 12F, 12L, 12R. In addition, the brake device preferably reduces the rotational rate of the at least one wheel when the user steps on the brake pedal 46.

A3. Control Process:

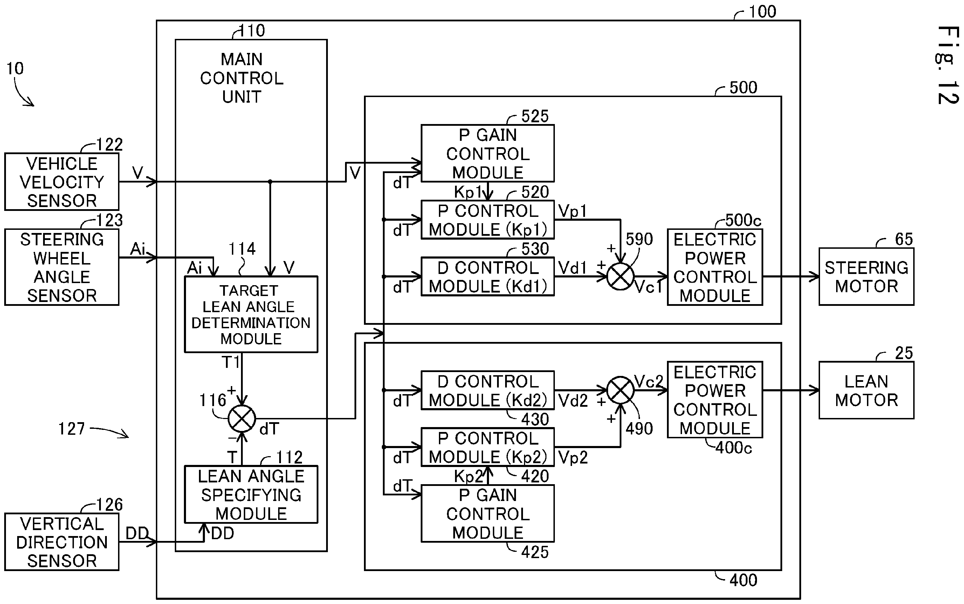

The control process of S130 (Fig. 11) will be described below. Fig. 12 is a block diagram showing a portion of the controller 100 which is related to the control of the lean motor 25 and the steering motor 65. The main control unit 110 includes a lean angle specifying module 112, a target lean angle determination module 114, and a summing point 116. The steering motor control unit 500 includes a first P control module 520, a first P gain control module 525, a first D control module 530, a first summing point 590, and an electric power control module 500c. The lean motor control unit 400 includes a second P control module 420, a second P gain control module 425, a second D control module 430, a second summing point 490, and an electric power control module 400c. The processing modules 112, 114, 116 of the main control unit 110 are implemented by the processor 110p of the main control unit 110 (Fig. 10). The processing modules 420, 425, 430, 490 of the lean motor control unit 400 are implemented by the processor 400p of the lean motor control unit 400. The processing modules 520, 525, 530, 590 of the steering motor control unit 500 are implemented by the processor 500p of the steering motor control unit 500. Hereinafter, a phrase "the processor 110p, 400p, 500p performs a process as the processing modules 112, 114, 116, 420, 425, 430, 490, 520, 525, 530, 590" may be expressed as a phrase "the processing modules 112, 114, 116, 420, 425, 430, 490, 520, 525, 530, 590 perform a process."

Fig. 11 is a flowchart showing an example process of a first control (Fig. 11: S130). In S200, the main control unit 110 acquires information indicative of the vehicle velocity V, the steering wheel angle Ai, and the vertically downward direction DD from the sensors 122, 123, and 126, respectively.

In S210, the lean angle specifying module 112 (Fig. 12) uses the vertically downward direction DD to calculate the lean angle T. As described above, the sensor direction relationship between the vehicle upward direction DVU of the vehicle body 90 and the reference direction of the vertical direction sensor 126 is predetermined. The lean angle specifying module 112 uses this sensor direction relationship to calculate the lean angle T, which is an angle between the upward direction DU (i.e. a direction opposite to the vertically downward direction DD) and the vehicle upward direction DVU The calculated lean angle T is an angle between the vertically upward direction DU and the vehicle upward direction DVU when the vehicle 10 is viewed in the front direction DF. It should be noted that the portion of the controller 100 which operates as the lean angle specifying module 112, and the vertical direction sensor 126 as a whole is an example lean angle sensor configured to measure the lean angle T. Hereinafter, the lean angle specifying module 112

and the vertical direction sensor 126 as a whole may be referred to as lean angle sensor 127.

In S220, the target lean angle determination module 114 (Fig. 12) uses the steering wheel angle Ai and the vehicle velocity V to determine the first target lean angle T1. The first target lean angle T1 represents a target value of the lean angle T. The correspondence between the steering wheel angle Ai and vehicle velocity V and the first target lean angle T1 is predefined by the angle map data MT stored in the non-volatile memory 110n of the main control unit 110 (Fig. 10). The target lean angle determination module 114 references this angle map data MT to identify the first target lean angle T1 corresponding to the combination of steering wheel angle Ai and vehicle velocity V. In this embodiment, when the vehicle velocity V is fixed, the larger the absolute value of the steering wheel angle Ai is, the larger the absolute value of the first target lean angle T1 is. Accordingly, the larger the absolute value of the steering wheel angle Ai is, the smaller the turning radius R is, and therefore the vehicle 10 can turn in a turning radius R appropriate to the steering wheel angle Ai. In addition, when the steering wheel angle Ai is fixed, the higher the vehicle velocity V is, the smaller the absolute value of the first target lean angle T1 is. This suppresses a significant change in the lean angle T due to a change in the steering wheel angle Ai when the vehicle velocity V is higher, and therefore the driving stability of the vehicle 10 can be improved. It should be noted that a variety of other relationships may be employed as the relationship between the first target lean angle T1 and the vehicle velocity V. In addition, the information used to determine the first target lean angle T1 may be any information including the steering wheel angle Ai instead of the combination of steering wheel angle Ai and vehicle velocity V.

In S230, the summing point 116 (Fig. 12) calculates a difference dT (sometimes referred to as lean angle difference dT) by subtracting the lean angle T from the first target lean angle T1.

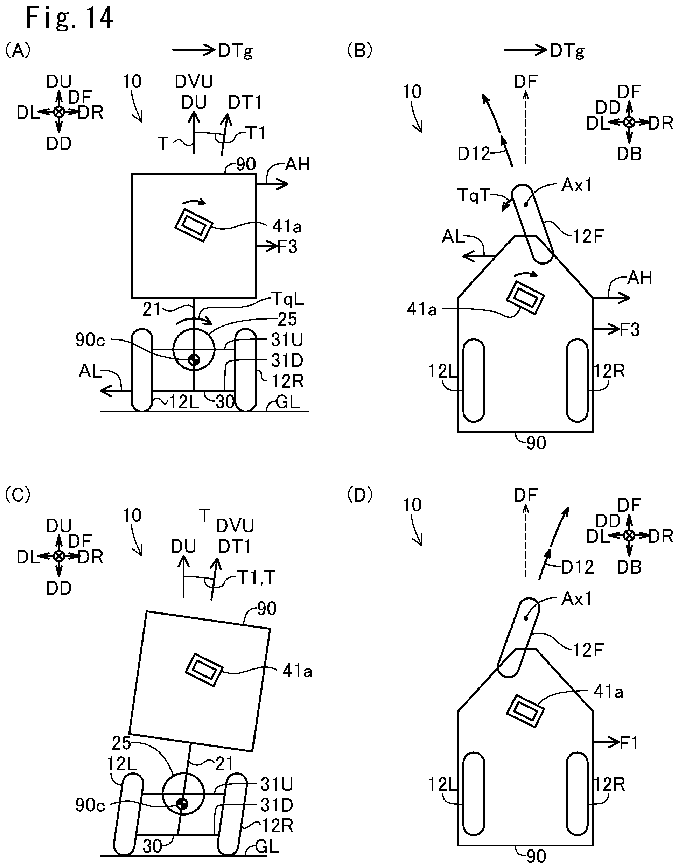

S240-S280 are performed by the steering motor control unit 500. S300-S340 are performed by the lean motor control unit 400. Fig. 14(A)-Fig. 14(D) are explanatory diagrams illustrating the turning torque of the steering motor 65 controlled by the steering motor control unit 500, and the lean torque of the lean motor 25 controlled by the lean motor control unit 400. Fig. 14(A), Fig. 14(C) show rear views of the vehicle 10, and Fig. 14(B), Fig. 14(D) show top views of the vehicle 10.

Fig. 14(A), Fig. 14(B) show when the steering wheel 41a is rotated to right with the upstanding vehicle 10 moving forward. In this situation, the vehicle upward direction DVU is approximately the same as the upward direction DU, and the lean angle T is approximately equal to zero. In addition, the first target lean angle T1 indicates a state where the vehicle body 90 leans to the right direction DR side because the steering wheel 41a is rotated to right. A target direction DTg shown in this figure indicates a rotational direction, either right or left, when the vehicle body 90 is caused to rotate in its width direction (i.e. the vehicle body 90 is caused to roll) so that the lean angle T approaches the first target lean angle T1. In the example of Fig. 14(A), Fig. 14(B), the target direction DTg is the right direction. A direction DT1 in Fig. 14(A) is defined by the first target lean angle T1, and is a target direction of the vehicle upward direction DVU. The direction DT1 indicates the vehicle upward direction DVU when the lean angle T is the first target lean angle T1. As shown, the direction DT1 is tilted to the right direction DR side relative to the upward direction DU.

In this situation, the lean motor control unit 400 causes the lean motor 25 (Fig. 14(A)) to output a lean torque TqL that rotates the center longitudinal link member 21 in clockwise direction relative to the upper lateral link member 31U (described in detail later). This lean torque TqL leans the vehicle body 90 to the right direction DR side. The direction of the lean torque TqL (in this case, the right direction DR) is the same as the target direction DTg.

The steering motor control unit 500 causes the steering motor 65 to output a turning torque TqT (Fig. 14(B)) that turns the front fork 17 (and thus the front wheel 12F) toward the left direction DL. The direction of the turning torque TqT (in this case, the left direction DL) is opposite to the target direction DTg (and the turning torque may be referred to as counter torque TqT). In this manner, the steering motor control unit 500 causes the steering motor 65 to output the torque in the direction opposite to the target direction DTg (i.e. the roll direction of the vehicle body 90 for causing the lean angle T to approach the first target lean angle T1) when the lean angle T is different from the first target lean angle T1. Such a control of wheel may be referred to as counter-steering. In this embodiment, the counter-steering is employed to cause the lean angle T to approach the first target lean angle T1.

As shown in Fig. 14(B), the front wheel 12F turns to the left direction DL side due to the counter torque TqT. This causes the moving direction D12 of the front wheel 12F to turn to the left direction DL side, and the vehicle 10 turns toward the left direction DL side accordingly. As a result, the vehicle body 90 is subject to a centrifugal force F3. This centrifugal force F3 is in the right direction DR, i.e. the target direction DTg. Accordingly, the vehicle body 90 can use the centrifugal force F3 to rotate to the target direction DTg.

In addition, a portion on the downward direction DD side of the vehicle 10 which includes the front wheel 12F (in particular, a portion on the downward direction DD side of the gravity center 90c) moves toward the left direction DL side as indicated by the arrow AL in Fig. 14(A), Fig. 14(B) because the moving direction D12 of the front wheel 12F turns to the left direction DL side. Furthermore, the movement of the gravity center 90c is more difficult than that of a portion of the vehicle 10. Accordingly, a portion on the upward direction DU side of the gravity center 90c of the vehicle 10 easily moves toward the right direction DR side as indicated by the arrow AH in Fig. 14(A), Fig. 14(B). In this manner, the vehicle body 90 can use the rotation about the gravity center 90c to rotate to the target direction DTg.

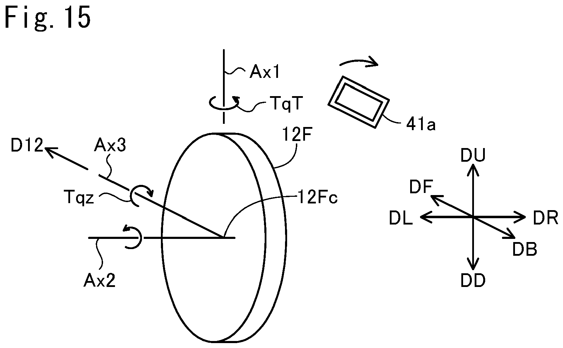

In addition, the vehicle body 90 can use precession movement of the front wheel 12F to rotate to the target direction DTg. Fig. 15 is a perspective view of the front wheel 12F similar to Fig. 9. The steering wheel 41a is also shown. When the steering wheel 41a is rotated to right, the left turning torque TqT is applied to the front wheel 12F. Due to such a counter torque TqT, the rotating front wheel 12F is subject to a torque Tqz about the front axis Ax3 to lean the front wheel 12F to the right direction DR side. The front wheel 12F being subject to such a torque Tqz leans the vehicle body 90 to the right direction, i.e. to the target direction DTg.

As described above, the counter torque TqT can use the centrifugal force F3 (Fig. 14(B)), the movement of the vehicle body 90 about the gravity center 90c (Fig. 14(A)), and the precession movement of the front wheel 12F (Fig. 15) to rotate the vehicle body 90 to the target direction DTg. This allows the lean angle T to easily approach the first target lean angle T1. In addition, the acceleration in the width direction perceived by the driver of the vehicle 10 is suppressed when the vehicle body 90 rotates to the direction of the centrifugal force F3. This improves the ride quality of the vehicle 10. The same applies to when the steering wheel 41a is rotated to left. The centrifugal force F3 is increased with an increase in the vehicle velocity V. The rotation of the vehicle body 90 about the gravity center 90c is increased with an increase in the vehicle velocity V. The angular momentum of the front wheel 12F is increased with an increase in the vehicle velocity V. Accordingly, the force caused by the counter torque TqT to rotate the vehicle body 90 to the target direction DTg is increased with an increase in the vehicle velocity V.

Fig. 14(C), Fig. 14(D) show that the lean angle T has become the first target lean angle T1 (the lean angle difference dT is approximately equal to zero) after Fig. 14(A), Fig. 14(B). In this situation, the lean torque TqL of the lean motor 25 is approximately equal to zero, and the turning torque TqT of the steering motor 65 is also approximately equal to zero. When the turning torque TqT is smaller, the front wheel 12F can turn to right and left independently of the direction of the steering wheel 41a. As described above, when the vehicle 10 moves at the lean angle T, the orientation of the front wheel 12F can settle at an orientation of the wheel angle AF determined based on the turning radius R expressed in Equation 6, and Equation 7. In the example of Fig. 14(D), the moving direction D12 of the front wheel 12F turns toward the right direction DR side in the same manner as the direction of the steering wheel 41a.

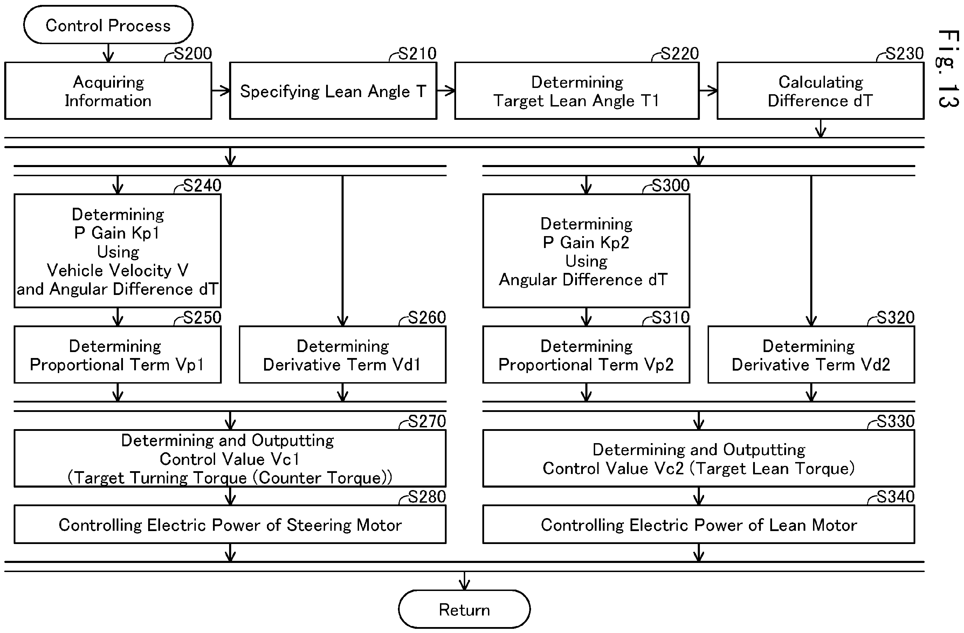

In this embodiment, when the magnitude of the lean angle difference dT is larger, the larger counter torque TqT facilitates the change in the lean angle T of the vehicle body 90. When the magnitude of the lean angle difference dT is smaller, the smaller counter torque TqT allows the front wheel 12F to turn naturally. S240-S280 and S300-S340 of Fig. 13 will be described below.

In S240, the first P gain control module 525 (Fig. 12) determines a first P gain Kp1 using the vehicle velocity V and the lean angle difference dT. The correspondence between the vehicle velocity V and lean angle difference dT and the first P gain Kp1 is predefined by the first map data Mp1 stored in the non-volatile memory 500n of the steering motor control unit 500 (Fig. 10). The first P gain control module 525 references this first map data Mp1 to identify the first P gain Kp1 corresponding to the combination of vehicle velocity V and lean angle difference dT.

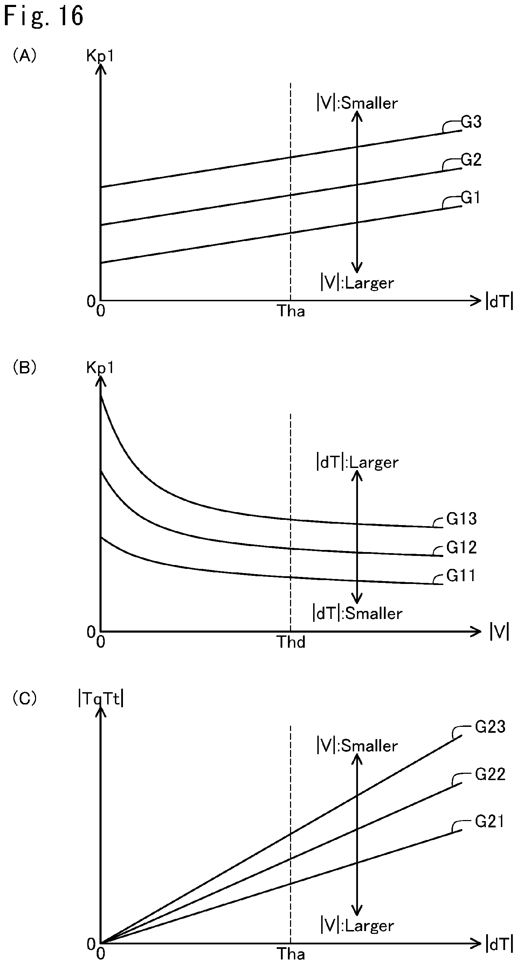

Fig. 16(A), Fig. 16(B) is a graph showing an example relationship between the velocity V and lean angle difference dT and the first P gain Kp1. In the graph of Fig. 16(A), the horizontal axis represents the absolute value of the lean angle difference dT (i.e. the magnitude of the lean angle difference dT), and the vertical axis represents the first P gain Kp1. Fig. 16(A) shows three plots G1-G3. These plots G1-G3 are three example plots corresponding to absolute values of three vehicle velocities V that are different from each other. As shown, when the vehicle velocity V is constant, the larger the absolute value of the lean angle difference dT, the larger the first P gain Kp1 is. The first P gain Kp1 changes smoothly as the lean angle difference dT changes. In addition, the smaller the absolute value of the vehicle velocity V, the larger the first P gain Kp1 is. In this figure, a predetermined threshold Tha larger than zero is shown. When the absolute value of the lean angle difference dT is larger than the threshold Tha, the first P gain Kp1 is larger as compared to when the absolute value of the lean angle difference dT is smaller than the threshold Tha.

In the graph of Fig. 16(B), the horizontal axis represents the absolute value of the vehicle velocity V, and the vertical axis represents the first P gain Kp1. Fig. 16(B) shows three plots G11-G13. These plots G11-G13 are three example plots corresponding to absolute values of three lean angle differences dT that are different from each other. As shown, when the lean angle difference dT is constant, the smaller the absolute value of the vehicle velocity V, the larger the first P gain Kp1 is. The first P gain Kp1 changes smoothly as the vehicle velocity V changes. In this figure, a predetermined threshold Thd larger than zero is shown. When the absolute value of the vehicle velocity V is smaller than the threshold Thd, the first P gain Kp1 is larger as compared to when the absolute value of the vehicle velocity V is larger than the threshold Thd.

The reason that the relationship between the vehicle velocity V and lean angle difference dT and the first P gain Kp1 is configured as shown in Fig. 16(A), Fig. 16(B) will be described later.

In S250 (Fig. 13), the first P control module 520 (Fig. 12) determines a first proportional term Vp1 using the lean angle difference dT and the first P gain Kp1 determined by the first P gain control module 525. The first proportional term Vp1 may be determined by a well-known method for determining a proportional term of PID control. For example, a value obtained by multiplying the lean angle difference dT by the first P gain Kp1 is output as the first proportional term Vp1.

In S260, the first D control module 530 uses the lean angle difference dT and a first D gain Kd1 to determine a first derivative term Vd1. In this embodiment, the first D gain Kd1 is predetermined. The first derivative term Vd1 may be determined by a well-known method for determining a derivative term of PID control. For example, a value obtained by multiplying a derivative value of the lean angle difference dT by the first D gain Kd1 is output as the first derivative term Vd1. The derivative value of the lean angle difference dT may be calculated by a variety of methods. For example, a value obtained by subtracting a lean angle difference dT at a point of time in the past by a particular time difference from current time from a current lean angle difference dT may be employed as the derivative value. The time difference for determining the derivative value of the lean angle difference dT may be predetermined, or may be determined based on another parameter (e.g. the lean angle difference dT) instead. Similarly, derivative values of other parameters described later may also be calculated by a variety of methods. It should be noted that the first D gain Kd1 may be a variable value that varies depending on another parameter (e.g. the lean angle difference dT).

It should be noted that S240, S250 for determining the first proportional term Vp1 and S260 for determining the first derivative term Vd1 are performed in parallel.

In S270, the first summing point 590 (Fig. 12) acquires information indicative of terms Vp1, Vd1 from the processing modules 520, 530, respectively. Then, the first summing point 590 calculates a turning actuation control value Vc1 which is a sum of these terms Vp1, Vd1, and then outputs information indicative of the turning actuation control value Vc1 to the electric power control module 500c. In S280, the electric power control module 500c controls the electric power to be supplied to the steering motor 65 according to the control value Vc1.

The turning actuation control value Vc1 indicates a target value of turning torque of the steering motor 65. Hereinafter, the torque indicated by the turning actuation control value Vc1 may be referred to as target turning torque. The direction of the target turning torque indicated by the turning actuation control value Vc1 is opposite to the target direction DTg as illustrated in Fig. 14(B) (i.e. it is a counter torque). The turning actuation control value Vc1 indicates, for example, magnitude and direction of electric current to be supplied to the steering motor 65. The magnitude of electric power (i.e. the magnitude of torque of the steering motor 65) is increased with an increase in the absolute value of the control value Vc1. In S270, the steering motor control unit 500 (more specifically, the first summing point 590) may be considered to determine the target turning torque of the steering motor 65. In S280, the steering motor control unit 500 (more specifically, the electric power control module 500c) may be considered to control the torque of the steering motor 65 to become the target turning torque. In addition, each term Vp1, Vd1 constitutes a part of the turning actuation control value Vc1. Therefore, each term Vp1, Vd1 may be also considered to be a kind of control value that indicates the turning torque of the steering motor 65.

The user usually operates the steering wheel 41a moderately. The first P gain Kp1 and the first D gain Kd1 are determined so that the magnitude of the first proportional term Vp1 is larger than that of the first derivative term Vd1 when the steering wheel 41a is operated moderately. That is, the major component of the target turning torque of the steering motor 65 can be indicated by the first proportional term Vp1. In addition, the first proportional term Vp1 is an example control value indicative of counter torque. Fig. 16(C) is a graph showing an example of target turning torque TqTt. The horizontal axis represents the absolute value of the lean angle difference dT, and the vertical axis represents the absolute value of the target turning torque TqTt. Fig. 16(C) shows three plots G21-G23. These plots G21-G23 are three example plots corresponding to absolute values of three vehicle velocities V that are different from each other. As described above, the first proportional term Vp1 is a control value obtained by multiplying the lean angle difference dT by the first P gain Kp1. Therefore, as shown, when the vehicle velocity V is constant, the larger the absolute value of the lean angle difference dT, the larger the magnitude of torque indicated by the first proportional term Vp1 (i.e. the absolute value of the target turning torque TqTt) is. In addition, the smaller the absolute value of the vehicle velocity V, the larger the absolute value of the target turning torque TqTt is. The threshold Tha shown in this figure is the same as the threshold Tha in Fig. 16(A). The magnitude of the target turning torque TqTt when the magnitude of the lean angle difference dT is larger than the threshold Tha is larger than the magnitude of the target turning torque TqTt when the magnitude of the lean angle difference dT is smaller than the threshold Tha.

When the magnitude of the lean angle difference dT is larger as in Fig. 14(A), Fig. 14(B), the magnitude of the turning torque TqT (i.e. the magnitude of the counter torque TqT) is larger according to the target turning torque TqTt. The larger turning torque TqT (i.e. larger counter torque TqT) can turn the front wheel 12F in a direction opposite to the target direction DTg. This allows the vehicle body 90 to easily rotate to the target direction DTg. Thus, the lean angle T can easily approach the first target lean angle T1.

When the lean angle T approaches the first target lean angle T1, and thus the magnitude of the lean angle difference dT decreases as in Fig. 14(C), Fig. 14(D), the magnitude of the first proportional term Vp1 decreases. Accordingly, the magnitude of the target turning torque TqTt decreases (Fig. 16(C)). As a result, unintended change can be suppressed in the lean angle T of the vehicle body 90.

In addition, the first P gain Kp1 is approximately equal to a counter turning torque ratio, which is a ratio of the magnitude of the target turning torque to the magnitude of the lean angle difference dT. As shown in Fig. 16(A), the first P gain Kp1 when the magnitude of the lean angle difference dT is larger than the threshold Tha is larger than the first P gain Kp1 when the magnitude of the lean angle difference dT is smaller than the threshold Tha (in particular, if the vehicle velocity V is constant). That is, the first proportional term Vp1 (and thus the target turning torque) is determined so that the counter turning torque ratio when the magnitude of the lean angle difference dT is larger than the threshold Tha is larger than the counter turning torque ratio when the magnitude of the lean angle difference dT is smaller than the threshold Tha. Therefore, the magnitude of the target turning torque when the magnitude of the lean angle difference dT is larger than the threshold Tha is larger than the magnitude of the target turning torque when the magnitude of the lean angle difference dT is smaller than the threshold Tha. As a result, when the magnitude of the lean angle difference dT is larger, the lean angle T of the vehicle body 90 can be changed readily. When the magnitude of the lean angle difference dT is smaller, unintended change can be suppressed in the lean angle T of the vehicle body 90.

In addition, as illustrated in Fig. 9 etc. in this embodiment, the front wheel support device 41 is configured to allow the front wheel 12F to turn right and left relative to the vehicle body 90 following the change in the lean angle T when the turning torque TqT is smaller. Accordingly, as shown Fig. 14(D), the moving direction D12 of the front wheel 12F turn to a direction corresponding to the lean angle T when the magnitude of the lean angle difference dT is smaller. As a result, the vehicle 10 turns stably toward the direction corresponding to the steering wheel angle Ai.

In addition, as shown in Fig. 16(B), the first P gain Kp1 when the magnitude of the vehicle velocity V is smaller than the threshold Thd is larger than the first P gain Kp1 when the magnitude of the vehicle velocity V is larger than the threshold Thd. As described above, the force caused by the counter torque TqT to rotate the vehicle body 90 to the target direction DTg as illustrated in Fig. 14(A), Fig. 14(B), Fig. 15 is decreased with a decrease in the vehicle velocity V. Accordingly, by increasing the first P gain Kp1 in the case of the magnitude of the vehicle velocity V being smaller, the vehicle body 90 can be rotated toward the target direction DTg properly even if the magnitude of the vehicle velocity V is smaller. Accordingly, it is possible to suppress delayed change in the lean angle T of the vehicle body 90.

In S300, the second P gain control module 425 (Fig. 12) determines a second P gain Kp2 using the lean angle difference dT. The correspondence between the lean angle difference dT and the second P gain Kp2 is predefined by the second map data MP2 stored in the non-volatile memory 400n of the lean motor control unit 400 (Fig. 10). The second P gain control module 425 references this second map data MP2 to identify the second P gain Kp2 corresponding to the lean angle difference dT.

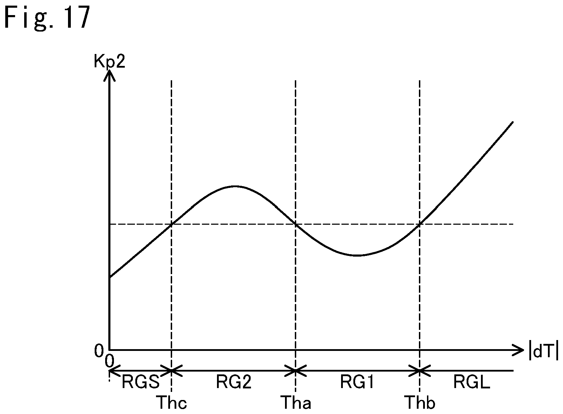

Fig. 17 is a graph showing an example relationship between the lean angle difference dT and the second P gain Kp2. The horizontal axis represents the absolute value of the lean angle difference dT, and the vertical axis represents the second P gain Kp2. The figure shows three thresholds Thc, Tha, Thb for the absolute value of the lean angle difference dT (0<Thc<Tha<Thb). The threshold Tha is the same as the threshold Tha in Fig. 16(A). The thresholds Thb, Thc are predetermined. As shown, as the absolute value of the lean angle difference dT increases from zero, the second P gain Kp2 increases, decreases, and then increases. The second P gain Kp2 is larger within a second range RG2 of larger than the threshold Thc and smaller than the threshold Tha as compared to that within a first range RG1 of larger than the threshold Tha and smaller than the threshold Thb. In addition, the second P gain Kp2 is smaller within a smaller range RGS of not larger than the threshold Thc as compared to that within the second range RG2. The second P gain Kp2 is larger within a larger range RGL of not smaller than the threshold Thb as compared to that within the first range RG1. The reason that the second P gain Kp2 is configured in this manner will be described later. It should be noted that the second P gain Kp2 changes smoothly as the lean angle difference dT changes.

In S310 (Fig. 13), the second P control module 420 (Fig. 12) determines a second proportional term Vp2 using the lean angle difference dT and the second P gain Kp2 determined by the second P gain control module 425. The second proportional term Vp2 may be determined by a well-known method for determining a proportional term of PID control. For example, a value obtained by multiplying the lean angle difference dT by the second P gain Kp2 is output as the second proportional term Vp2.

In S320, the second D control module 430 uses the lean angle difference dT and a second D gain Kd2 to determine a second derivative term Vd2. In this embodiment, the second D gain Kd2 is predetermined. The second derivative term Vd2 may be determined by a well-known method for determining a derivative term of PID control. For example, a value obtained by multiplying a derivative value of the lean angle difference dT by the second D gain Kd2 is output as the second derivative term Vd2. The time difference for determining the derivative value of the lean angle difference dT may be predetermined, or may be determined based on another parameter (e.g. the lean angle difference dT) instead. It should be noted that the second D gain Kd2 may be a variable value that varies depending on another parameter (e.g. the lean angle difference dT).

It should be noted that S300, S310 for determining the second proportional term Vp2 and S320 for determining the second derivative term Vd2 are performed in parallel.

In S330, the second summing point 490 (Fig. 12) acquires information indicative of terms Vp2, Vd2 from the processing modules 420, 430, respectively. Then, the second summing point 490 calculates a lean actuation control value Vc2 which is a sum of these terms Vp2, Vd2, and then outputs information indicative of the lean actuation control value Vc2 to the electric power control module 400c. In S340, the electric power control unit 400c controls the electric power to be supplied to the lean motor 25 according to the control value Vc2.

The lean actuation control value Vc2 indicates a target value of lean torque of the lean motor 25. Hereinafter, the torque indicated by the lean actuation control value Vc2 may be referred to as target lean torque. The direction of the lean torque indicated by the lean actuation control value Vc2 is the same as the target direction DTg, i.e. the rotational direction of the vehicle body 90 for causing the lean angle T to approach the first target lean angle T1, as shown in Fig. 14(A). The lean actuation control value Vc2 indicates, for example, magnitude and direction of electric current to be supplied to the lean motor 25. The magnitude of electric power (i.e. the magnitude of torque of the lean motor 25) is increased with an increase in the absolute value of the control value Vc2. In S330, the lean motor control unit 400 (more specifically, the second summing point 490) may be considered to determine the target lean torque of the lean motor 25. In S340, the lean motor control unit 400 (more specifically, the electric power control module 400c) may be considered to control the torque of the lean motor 25 to become the target lean torque. In addition, each term Vp2, Vd2 constitutes a part of the lean actuation control value Vc2. Therefore, each term Vp2, Vd2 may be also considered to be a kind of control value that indicates the lean torque of the lean motor 25.

As described above, the target turning torque and the target lean torque are determined using the first target lean angle T1 (Fig. 13: S240-S270, S300-S330). Accordingly, it is possible to properly adjust the balance of the turning torque and the lean torque for the vehicle 10 to run at the first target lean angle T1. This can result in improved driving stability of the vehicle 10.

In addition, the user usually operates the steering wheel 41a moderately. The second P gain Kp2 and the second D gain Kd2 are determined so that the magnitude of the second proportional term Vp2 is larger than that of the second derivative term Vd2 when the steering wheel 41a is operated moderately. That is, the major component of the target lean torque of the lean motor 25 can be indicated by the second proportional term Vp2. The second proportional term Vp2 is an example control value indicative of a torque causing the vehicle body 90 to rotate to the target direction DTg. And, the second P gain Kp2 is approximately equal to a lean torque ratio, which is a ratio of the magnitude of the target lean torque to the magnitude of the lean angle difference dT. As shown in Fig. 17, the second P gain Kp2 when the magnitude of the lean angle difference dT is within the first range RG1 of larger than the threshold Tha is smaller than the second P gain Kp2 when the magnitude of the lean angle difference dT is within the second range RG2 of smaller than the threshold Tha. That is, the second proportional term Vp2 (and thus the target lean torque) is determined so that the lean torque ratio when the magnitude of the lean angle difference dT is within the first range RG1 of larger than the threshold Tha is smaller than the lean torque ratio when the magnitude of the lean angle difference dT is within the second range RG2 of smaller than the threshold Tha. In addition, as shown in Fig. 16(A), the first P gain Kp1 for the target turning torque is larger when the magnitude of the lean angle difference dT is larger than the threshold Tha, and is smaller when the magnitude of the lean angle difference dT is smaller than the threshold Tha. In this manner, within the first range RG1 where the magnitude of the lean angle difference dT is larger, excessive increase in the lean torque caused by the lean motor 25 is suppressed as compared to within the second range RG2 where the magnitude of the lean angle difference dT is smaller. In addition, the rotation of the vehicle body 90 in its width direction is facilitated that uses the turning torque, the counter torque of the steering motor 65, and therefore the lean angle of the vehicle body can be changed properly. And, the acceleration in the width direction perceived by the driver is suppressed.

In addition, as shown in Fig. 17, the second P gain Kp2 when the magnitude of the lean angle difference dT is larger than the threshold Thb is larger than the second P gain Kp2 within the first range RG1. Accordingly, when the magnitude of the lean angle difference dT is larger than the threshold Thb, the lean angle T of the vehicle body 90 can be changed readily by using the lean torque of the lean motor 25 in addition to the turning torque of the steering motor 65. In addition, when the magnitude of the lean angle difference dT is larger, the driver desires rapid change in the lean angle T. In such a case, delay in the lean angle T relative to the change in the steering angle is suppressed.

In addition, as shown in Fig. 17, the second P gain Kp2 when the magnitude of the lean angle difference dT is smaller than the threshold Thc is smaller than the second P gain Kp2 when the magnitude of the lean angle difference dT is within the second range RG2. Accordingly, when the magnitude of the lean angle difference dT is smaller than the threshold Thc, excessive increase in the lean torque caused by the lean motor 25 is suppressed. In addition, the rotation of the vehicle body 90 in its width direction is facilitated that uses the turning torque, the counter torque of the steering motor 65, and therefore the lean angle of the vehicle body can be changed properly. And, the acceleration in the width direction perceived by the driver is suppressed.

It should be noted that S240-S280 for controlling the steering motor 65 and S300-S340 for controlling the lean motor 25 are performed in parallel. Then, the process of Fig. 13, i.e. S130 of Fig. 11, ends.

B. Modifications:

(1) As the process of controlling the turning torque, a variety of other processes may be employed instead of the processes described above with reference to Fig. 12, Fig. 13, Fig. 16(A)-Fig. 16(C). For example, in the graph of Fig. 16(B), the first P gain Kp1 may change in a stepwise manner as the magnitude of the vehicle velocity V changes. Alternatively, the first P gain Kp1 may be maintained at a constant value as the vehicle velocity V changes. In this case, the first P gain control module 525 (Fig. 12) may use the lean angle difference dT without using the vehicle velocity V to determine the first P gain Kp1. In the graph of Fig. 16(A), the first P gain Kp1 may change in a stepwise manner as the magnitude of the lean angle difference dT changes. Alternatively, the first P gain Kp1 may be maintained at a constant value as the lean angle difference dT changes. In this case, the first P gain control module 525 may use the vehicle velocity V without using the lean angle difference dT to determine the first P gain Kp1. Alternatively, the first P gain Kp1 may be a fixed value rather than a variable value. Again in this case, when the magnitude of the lean angle difference dT is larger, the magnitude of torque indicated by the first proportional term Vp1 is larger as compared to when the magnitude of the lean angle difference dT is smaller. As a result, when the magnitude of the lean angle difference dT is larger, the magnitude of the target turning torque is larger as compared to when the magnitude of the lean angle difference dT is smaller.

As the process of controlling the turning torque, a variety of feedback controls may be employed that use the lean angle and the target lean angle. For example, the D control (Fig. 13: S260) may be omitted. However, the D control can be used to improve the stability of the turning torque. Alternatively, the controller 100 may use one or more of a variety of control values to determine the turning actuation control value Vc1 (and thus the target turning torque). For example, the controller 100 may use the target lean angle to determine a forward control value indicative of a torque which causes the front wheel 12F to turn toward the same direction as the target direction DTg, and then use the forward control value to determine the turning actuation control value Vc1. In this case, the controller 100 may calculate a sum of one or more control values as the turning actuation control value Vc1. The one or more control values used to determine the target turning torque may include at least one of a control value indicative of a counter torque (e.g. first proportional term Vp1) or the forward control value. In addition, the one or more control values used to determine the target turning torque preferably includes a control value indicative of a counter torque.

(2) As the process of controlling the lean torque, a variety of other processes may be employed instead of the processes described above with reference to Fig. 12, Fig. 13, Fig. 17. For example, in the graph of Fig. 17, the second P gain Kp2 may change in a stepwise manner as the magnitude of the lean angle difference dT changes. Alternatively, within the larger range RGL, the second P gain Kp2 is equal to or smaller than the maximum second P gain Kp2 within the first range RG1. Within the smaller range RGS, the second P gain Kp2 is equal to or larger than the minimum second P gain Kp2 within the second range RG2. The threshold Thc may be equal to zero. That is, the smaller range RGS may be omitted. Alternatively, the second P gain Kp2 may be constant as the lean angle difference dT changes. The drive device for driving the drive wheel may be any device which rotates the wheel (e.g. internal combustion engine) instead of the electric motor. In addition, the maximum riding capacity of the vehicle may be two or more persons instead of one person. May be at a value. In this case, the second P gain control module 425 may determine the second P gain Kp2 without using the lean angle difference dT. Alternatively, the second P gain Kp2 may be a fixed value rather than a variable value. As the process of controlling the lean torque, a variety of feedback controls may be employed that use the lean angle and the target lean angle. For example, the D control (Fig. 13: S320) may be omitted. However, the D control can be used to improve the stability of the lean torque. The controller 100 may use one or more control values to determine the lean actuation control value Vc2 (and thus the target lean torque). For example, the controller 100 may calculate a sum of one or more control values as the lean actuation control value Vc2. The one or more control values may include a control value (e.g. second proportional term Vp2) indicative of a torque causing the vehicle body 90 to rotate to the target direction DTg.

As described above with reference to Fig. 14(A), Fig. 14(B), the lean torque TqL directly rotates the vehicle body 90 in its width direction. On the other hand, the turning torque TqT indirectly rotates the vehicle body 90 in its width direction via the movement of the direction D12 of the front wheel 12F. As a result, the rotation of the vehicle body 90 in its width direction caused by the turning torque can occur in a delayed fashion relative to the rotation of the vehicle body 90 in its width direction caused by the lean torque. Accordingly, the controller 100 may delay the control of the lean torque relative to the control of the turning torque. This suppresses the rotation of the vehicle body 90 in its width direction caused by only the lean torque, and therefore the acceleration in the width direction perceived by the driver of the vehicle 10 is suppressed. It should be noted that the delay time should be less than one second.

(3) The controller 100 may be configured in a variety of ways to perform processes for controlling the device outputting the turning torque (e.g. the steering motor 65) and the device outputting the lean torque (e.g. the lean motor 25). For example, the controller 100 may be configured by using a single computer. At least part of the controller 100 may be configured with dedicated hardware such as ASIC (Application Specific Integrated Circuit). For example, the lean motor control unit 400 and the steering motor control unit 500 in Fig. 12 may be configured with an ASIC. The controller 100 may be a variety of electric circuits, for example, an electric circuit with or without a computer. In addition, input values and output values mapped by the map data MT, MAF, Mp1, Mp2 may be mapped by any other element. For example, an element such as mathematical function, analog circuit, etc. may map the input values to the output values.

Alternatively, as the lean angle used for control of each of the turning torque and the lean torque, a variety of angles that indicates a degree of lean of the vehicle body 90 in its width direction may be employed instead of the lean angle T (Fig. 5(B)) with reference to the vertically upward direction DU. For example, the control angle Tc may be used as the lean angle. In this case, it is preferable to provide the vehicle 10 with a sensor configured to measure the control angle Tc. This sensor is an example lean angle sensor.

(4) The front wheel 12F (Fig. 2) is an example turn wheel that can turn to right and left relative to the forward movement direction DF of the vehicle 10. The front wheel support device 41 is an example turn wheel support unit that supports the turn wheel. The turn wheel support unit may be configured in a variety of other ways instead of the configuration of the front wheel support device 41. For example, the supporting member which rotatably supports the turn wheel may be a cantilevered member instead of the front fork 17. In addition, the turning device that supports the supporting member turnably to right and left relative to the vehicle body 90 may be a variety of other devices instead of the bearing 68. For example, the turning device may be a link mechanism coupling the supporting member to the vehicle body.

In general, the turn wheel support unit may include K (K is an integer equal to or larger than 1) supporting members. And, each supporting member may support one or more turn wheels. The turn wheel support unit may include K turning devices. The K turning devices may support turnably the K supporting members, respectively. The turn wheel support unit may include K turning actuators. The K turning actuators and the K supporting members have one-to-one correspondence. And, each turning actuator may be configured to apply the turning torque to the corresponding single supporting member. Alternatively, the turn wheel support unit may include a single turning actuator. The single turning actuator may be configured to apply the turning torque to each of the K supporting members.

In either case, the turn wheel support unit is preferably configured to allow one or more turn wheel to turn to right and left relative to the vehicle body following a change in lean of the vehicle body independently of operation amount input to the operation input unit (e.g. the steering wheel 41a). For example, a turning device secured to the vehicle body preferably supports turnably the supporting member. In this case, the supporting member also leans along with the vehicle body when the vehicle body leans. Accordingly, as described above with regard to Fig. 9 etc., the direction of the turn wheel (i.e. the wheel angle AF (Fig. 2)) can change following a lean of the vehicle body.

(5) The operation input unit may be a variety of other devices configured to be handled to input operation amount indicative of a turning direction and a degree of turn, instead of the device rotatable to right and left such as the steering wheel 41a (Fig. 1). For example, the operation input unit may be a lever that can be tilted to right and to left relative to a predetermined reference direction (e.g. upright direction).

(6) The lean device may be configured in any other way to lean the vehicle body 90 in its width direction instead of the configuration of the lean device 89 in Fig. 4. For example, the link mechanism 30 may be substituted with a pedestal. The motor 51L, 51R are secured to the pedestal. And, the pedestal and the first support portion 82 are coupled rotatably with each other via a bearing. The lean motor 25 can rotate the first support portion 82 to each of the right direction DR side and the left direction DL side relative to the pedestal. This enables the vehicle body 90 to lean to each of the right direction DR side and the left direction DL side.

In general, the lean device may include a "first member which is connected directly or indirectly to at least one of a pair of wheels spaced apart from each other in the width direction of the vehicle," a "second member connected directly or indirectly to the vehicle body," and an actuator. The actuator applies to the first member and the second member a force that changes the relative position between the first member and the second member (e.g. a torque that changes the orientation of the second member relative to the first member). The lean device may further include a "connection device for movably connecting the first member to the second member." The connection device may be a hydraulic cylinder that slidably connects the first member to the second member. Alternatively, the connection device may be a bearing that rotatably connects the first member to the second member. The bearing may be a ball bearing, or may be a sliding bearing instead. The actuator may be an electric motor such as the lean motor 25. Alternatively, the actuator may be a pump if the lean device includes the hydraulic cylinder.

(7) The connection which is connected to the operation input unit and to the supporting member of the turn wheel support unit may be configured in a variety of other ways instead of the configuration of the connection 50 of Fig. 1. The third portion 53 of the connection 50 may be an elastic body (e.g. Coil spring, torsion spring, rubber, etc.) which can be elastically deformed instead of the viscous damper. The third portion 53 may include a variety of devices which is connected to the first portion 51 and the second portion 52, transmits a torque from the first portion 51 to the second portion 52, and includes a movable part that allows for a change in relative position between the first portion 51 and the second portion 52. Such a third portion 53 allows the second portion 52 to move while the first portion 51 does not move, that is, allows the wheel angle AF to change while the steering wheel angle Ai does not change. As a result, the wheel angle AF of the front wheel 12F can change readily following a lean of the vehicle body 90. In general, preferably, the connection is connected mechanically to the operation input unit and to the supporting member, and transmits a torque from the operation input unit to the supporting member in response to a mechanical motion of the operation input unit due to handling of the operation input unit. And, the connection may allow the direction of the one or more turn wheels to change following a change in lean of the vehicle body independently of operation amount input to the operation input unit. It should be noted that such a connection may be omitted.

(8) A variety of configurations may be employed as the total number and arrangement of the plurality of wheels. For example, there may be one front wheel in total and one rear wheel in total. There may be two front wheels in total and one rear wheel in total. There may be two front wheels in total and two rear wheels in total. A pair of wheels spaced apart from each other in the width direction may be front wheels, and may also be turn wheels. The rear wheels may be turn wheels. The drive wheel may be the front wheel.

In general, the vehicle includes N (N is an integer equal to or larger than 2) wheels including at least one front wheel and at least one rear wheel. And, the N wheels include at least one turn wheel turnable to right and left. If the total number of wheels N is equal to 2, the lean device such as the lean device 89 is omitted. The vehicle may include N wheels, including a pair of wheels spaced apart from each other in the width direction of the vehicle, and at least one other wheel. In this case, the total number of wheels N is equal to or larger than 3. The pair of wheels may be front wheels, or may be rear wheels instead. In this case, at least one of the pair of wheels or the other wheel(s) are preferably configured as one or more turn wheels turnable to right and left relative to the forward movement direction of the vehicle. That is, only the pair of wheels may be turn wheels, only the other wheel(s) may be turn wheel(s), or the three or more wheels including the pair of wheels and the other wheel(s) may be tun wheels. In this case, the total number of the other wheel(s) included in the one or more turn wheels may be any number.

(9) The lean actuator may be any device configured to apply the lean torque to the vehicle body. For example, the lean actuator may include a weight connected to the vehicle body so that it can slide relative to the vehicle body in its width direction, and an electric motor for controlling the position of the weight relative to the vehicle body. When the weight moves to the right side of the vehicle body, the vehicle body can lean to right direction side, and when the weight moves to the left side of the vehicle body, the vehicle body can lean to left direction side.

(10) The method of controlling the vehicle may be a variety of other methods instead of the method described above with reference to Fig. 11 etc. For example, in S170, the second target lean angle T2 having an absolute value smaller than that of the first target lean angle T1 may be used instead of the first target lean angle T1.

(11) In the above embodiments, the controller 100 controls the steering motor 65 in a control mode that determines a counter torque as the target turning torque (sometimes referred to as counter torque mode). The controller 100 may have another control mode in addition to the counter torque mode as control modes for controlling the steering motor 65. For example, the controller 100 may have a control mode that determines as the target turning torque a torque causing the front wheel 12F to turn to the target direction DTg (sometimes referred to as forward torque mode). The controller 100 may change the control mode of the steering motor 65 according to the driving condition of the vehicle 10.

In the embodiment shown in Fig. 1, the wheel 12F has a positive trail Lt. Accordingly, the intersection point P2 between the turning axis Ax1 and the ground GL is located on the front direction DF side of the contact center P1 of the front wheel 12F with the ground GL. Assume that the vehicle body 90 begins to lean to the right direction DR due to the lean torque as in the example of Fig. 14(A). In this case, the vehicle body 90 will rotate about the gravity center 90c. Accordingly, a lower portion of the vehicle body 90 (in particular, a portion on the downward direction DD side of the gravity center 90c) can move to left direction DL. If the lower portion of the vehicle body 90 moves to the left direction DL, then the intersection point P2 (Fig. 1) also moves to the left direction DL. As a result, the direction D12 (Fig. 2) of the front wheel 12F turns to the left direction DL. In this manner, if the lean angle T changes toward the target direction DTg, the front wheel 12F can be subject to a torque causing the front wheel 12F to turn toward a direction opposite to the target direction DTg. If such a torque is excessively large, then the front wheel 12F can turn excessively toward the direction opposite to the target direction DTg. In this situation, the controller 100 may control the steering motor 65 in the forward torque mode. When the vehicle velocity V is lower, the angular momentum of the front wheel 12F is smaller, and therefore due to the rotation of the vehicle body 90 toward the target direction DTg, the front wheel 12F readily turn toward the direction opposite to the target direction DTg. Accordingly, the controller 100 may control the steering motor 65 in the forward torque mode when the vehicle velocity V is lower than a threshold, and control the steering motor 65 in the counter torque mode when the vehicle velocity V is higher than the threshold. A variety of methods may be used to determine the target turning torque in the forward torque mode. For example, a feedback control that uses a difference between the lean angle T and the target lean angle may be used to determine the target turning torque.

Alternatively, the controller 100 may have the forward torque mode without having the counter torque mode. In general, the controller 100 may have one or more control modes as the control mode of the steering motor 65 (generally, turning actuator). And, the controller 100 may use a parameter related to the driving condition of the vehicle 10 to change the control mode. In either control mode, the controller 100 preferably uses the target lean angle to determine the target lean torque and the target turning torque. Preferably, the controller 100 has one or more control modes including the counter torque mode. And, the controller 100 preferably determines the target turning torque (e.g. turning actuation control value Vc1) so that the direction D12 of the front wheel 12F temporarily changes toward the direction opposite to the target direction DTg when the steering wheel angle Ai (more generally, the operation amount input to the operation input unit) begins to change.

(12) The controller 100 (e.g. the main control unit 110) may determine the first target lean angle T1 using the steering wheel angle Ai without using the vehicle velocity V. In general, the controller 100 may determine the target lean angle using one or more parameters including the steering wheel angle Ai (more generally, the operation amount input to the operation input unit). Without limiting to the vehicle velocity V, it is possible to employ a variety of other parameters as parameter other than the operation amount.

The controller 100 uses a yaw rate of the vehicle 10 in addition to the steering wheel angle Ai to determine the first target lean angle T1. The yaw rate of the vehicle 10, which is change rate of yaw angle, is angular velocity of rotation about an axis that passes through the gravity center of the vehicle 10 and is parallel to the vertically upward direction DU. The current yaw rate can be determined using information from the gyroscope sensor 126g. The vehicle 10 can be subject to external factors such as wind. The traveling direction of the vehicle 10 can be affected by such a force. For example, assume that the steering wheel angle Ai is equal to zero, and the vehicle 10 is moving straight ahead on a horizontal road. If the wind blows from right to left, the vehicle body 90 is subject to a force in the left direction DL. As a result, the vehicle body 90 can lean to the left direction DL side, and thus the vehicle 10 can turn to the left direction DL. In order to suppress such an unintended turn, the controller 100 (e.g. the main control unit 110) may use the steering wheel angle Ai and the current yaw rate to determine the target lean angle. The controller 100 uses the steering wheel angle Ai to identify a target yaw rate. The correspondence between the steering wheel angle Ai and the target yaw rate is predetermined. For example, the target yaw rate of zero is mapped to the steering wheel angle Ai of zero. The target yaw rate indicative of right turn is mapped to the steering wheel angle Ai indicative of right turn. The controller 100 references this correspondence to identify the target yaw rate corresponding to the steering wheel angle Ai. Then, the main control unit 110 uses a difference between the target yaw rate and the current yaw rate to determine the target lean angle. For example, the controller 100 calculates the target lean angle by adding to the current lean angle T a correction value corresponding to the yaw rate difference between the target yaw rate and the current yaw rate. The correspondence between the yaw rate difference and the correction value may be determined experimentally in advance. For example, if the current yaw rate is equal to the target yaw rate (yaw rate difference = 0), the correction value is equal to zero. In this case, the first target lean angle T1 is equal to the current lean angle T. If the target yaw rate is equal to zero (i.e. Straight movement), and the current yaw rate indicates left turn, the correction value corrects the first target lean angle T1 to an angle rotated to the right direction DR side relative to the current lean angle T. For example, if the vehicle 10 turns to left unintentionally due to right-to-left wind in spite of the steering wheel angle Ai equal to zero, the first target lean angle T1 is determined to be an angle that indicates that the vehicle body 90 leans to the right direction DR side. This enables the vehicle 10 to resist the wind to move straight ahead. In this manner, deviation of the vehicle 10 from its intended traveling direction due to external factors is suppressed.

(13) In the above embodiment, the controller 100 uses the target lean angle to determine the target lean torque (i.e. to control the lean motor 25) and to determine the target turning torque (i.e. to control the steering motor 65). That is, the controller 100 uses the target value, which is a value corresponding to the target lean angle, to determine the target turning torque and the target lean torque. In the above embodiment, the target value is a value to be compared to the lean angle T. And, the target value (sometimes referred to as turning target value) used to determine the turning actuation control value Vc1 is the same as the target value (sometimes referred to as lean target value) used to determine the lean actuation control value Vc2.

The turning target value may be different from the lean target value. The reason is as follows. The turning actuator (in this case, the steering motor 65) controlled by using the turning actuation control value Vc1 is a device different from the lean actuator (in this case, the lean motor 25) controlled by using the lean actuation control value Vc2. In addition, the device (in this case, the front wheel 12F) moved by the steering motor 65 is different from the device (in this case, the vehicle body90) moved by the lean motor 25. Accordingly, the suitable target value, which is mapped to the target lean angle, used for the control causing the lean angle T to approach the target lean angle can differ between the turning actuation control value Vc1 and the lean actuation control value Vc2. For example, the turning target value may be a value obtained by multiplying the lean target value by a factor different form 1. In this manner, in order to cause the lean angle T to approach one target lean angle, the turning target value and lean target value that differ from each other may be used to control the steering motor 65 and the lean motor 25. For example, the first proportional term Vp1 may be determined by using the turning target value, and the second proportional term Vp2 may be determined by using the lean target value. The turning target value and lean target value that differ from each other in this manner may be considered to correspond to the same target lean angle.

For the driving stability of the vehicle 10, the angular difference indicated by the difference between the turning target value and the lean target value is preferably less than 10 degrees. Such an angular difference can be determined as follows, for example. A difference between a stable lean angle T when the lean motor 25 is controlled according to the lean target value and a stable lean angle T when the lean motor 25 is controlled according to a lean target value for comparison that is set to the same value as the turning target value may be employed as the angular difference.

In either case, the controller 100 may use one or more parameters including the steering wheel angle Ai (more generally, the operation amount input to the operation input unit) to determine the turning target value and the lean target value mapped to the target lean angle.

(14) If the turning target value is different from the lean target value, the lean angle difference (e.g. the lean angle difference dT in Fig. 16(A)) used to determine the turning actuation control value Vc1 (e.g. the first proportional term Vp1) is calculated by subtracting the lean angle T from the turning target value (referred to as turning actuation angular difference). The lean angle difference (e.g. the lean angle difference dT in Fig. 17) used to determine the lean actuation control value Vc2 (e.g. the second proportional term Vp2) is calculated by subtracting the lean angle T from the lean target value (referred to as lean actuation angular difference). The lean actuation angular difference may differ form the turning actuation angular difference. The lean actuation angular difference and turning actuation angular difference that differ from each other in this manner may be considered to correspond to an actual difference (i.e. the same difference) between the target lean angle and the lean angle T.

The threshold Tha (Fig. 17) that represents reference magnitude of the lean actuation angular difference is referred to as lean threshold. The threshold Tha (Fig. 16(A)) that represents reference magnitude of the turning actuation angular difference is referred to as turning threshold. The lean threshold may differ from the turning threshold. However, the lean threshold and the turning threshold preferably indicates the same threshold for an actual difference between the target lean angle and the lean angle T.

(15) The control unit 126c of the vertical direction sensor 126 may use other information related to the movement of the vehicle 10 in addition to the information from the gyroscope sensor 126g and the acceleration sensor 126a to detect the vertically downward direction DD. As the other information, for example, the location of the vehicle 10 determined by using GPS (Global Positioning System) may be used. The control unit 126c may correct the vertically downward direction DD according to change in location determined by GPS. An amount of correction based on change in location determined by GPS may be determined experimentally in advance. It should be noted that the control unit 126c may be a variety of electric circuits, for example, an electric circuit with a computer or an electric circuit (e.g. ASIC) without a computer. The gyroscope sensor 126g may be a sensor that detects an angular velocity instead of angular acceleration.

(16) The vehicle may be configured in a variety of other ways instead of the respective configuration of the above embodiments and modifications. For example, in the embodiment in Fig. 4, the motors 51L, 51R may be connected via suspensions to the link mechanism 30. The drive device for driving the drive wheels may be any device which rotates the wheels (e.g. internal combustion engine) instead of the electric motor. The maximum riding capacity of the vehicle may be two or more persons instead of one person. The correspondence relationship used to control the vehicle (e.g. the correspondence relationship represented by the map data MT, MAF, Mp1, Mp2) may be determined experimentally to allow the vehicle 10 to drive properly. The controller of the vehicle may dynamically change the correspondence relationship used to control the vehicle, according to the condition of the vehicle. For example, the vehicle may include a weight sensor for measuring the weight of the vehicle body, and the controller may adjust the correspondence relationship according to the weight of the vehicle body.

In each embodiment described above, some of the components which are achieved by hardware may be substituted with software while some or all of the components which are achieved by software may be substituted with hardware. For example, the function of the controller 100 in Fig. 12 may be achieved by a dedicated hardware circuitry.

In addition, if some or all of the functions of the present invention are achieved by a computer program, the program can be provided in the form of a computer-readable storage medium (e.g. non-transitory storage medium) having the program stored therein. The program can be used while being stored in a storage medium (computer-readable storage medium) which is the same as or different from the provided storage medium. The "computer-readable storage medium" is not limited to a portable storage medium such as memory card or CD-ROM, but may also include an internal storage within the computer such as various types of ROM, and an external storage connected to the computer such as hard disk drive.

The present invention has been described above with reference to the embodiments and the modifications although the above-described embodiments are intended to facilitate the understanding of the invention, but not to limit the invention. The present invention may be modified or improved without departing from the spirit of the invention, and includes its equivalents.

Industrial Applicability

The present invention can be preferably used for a vehicle.

Description of the References

| | |
|---|---|
| 10 | vehicle |
| 11 | seat |
| 12F | front wheel |
| 12L | left rear wheel |
| 12R | right rear wheel |
| 12Fc | gravity center |
| 12La | wheel |
| 12Lb | tire |
| 12Ra | wheel |
| 12Rb | tire |
| 17 | front fork |
| 20 | main body |
| 20a | front portion |
| 20b | bottom portion |
| 20c | rear portion |
| 20d | support portion |
| 21 | center longitudinal link member |
| 25 | lean motor |
| 30 | link mechanism |
| 31D | lower lateral link member |
| 31U | upper lateral link member |
| 33L | left longitudinal link member |
| 33R | right longitudinal link member |
| 38 | bearing |
| 39 | bearing |
| 41 | front wheel support device |
| 41a | steering wheel |
| 41ax | supporting rod |
| 45 | accelerator pedal |
| 46 | brake pedal |
| 47 | shift switch |
| 50 | connection |
| 51 | first portion |
| 52 | second portion |
| 53 | third portion |
| 51L | left electric motor |
| 51R | right electric motor |
| 65 | steering motor |
| 68 | bearing |
| 70 | suspension system |
| 70L | left suspension |
| 70R | right suspension |
| 71L, 71R | coil spring |
| 72L, 72R | shock absorber |
| 75 | connector rod |
| 80 | rear wheel support |
| 82 | first support portion |
| 83 | second support portion |
| 89 | lean device |
| 90 | vehicle body |
| 90c | gravity center |
| 100 | controller |
| 110 | main control unit |
| 110g, 300g, 400g, 500g | program |

| 110n, 300n, 400n, 500n | non-volatile memory |
| 110p, 300p, 400p, 500p | processor |
| 110v, 300v, 400v, 500v | volatile memory |
| 112 | lean angle specifying module |
| 114 | target lean angle determination module |
| 116 | summing point |
| 120 | battery |
| 122 | vehicle velocity sensor |
| 123 | steering wheel angle sensor |
| 124 | wheel angle sensor |
| 126 | vertical direction sensor |
| 126a | acceleration sensor |
| 126c | control unit |
| 126g | gyroscope sensor |
| 127 | lean angle sensor |
| 145 | accelerator pedal sensor |
| 146 | brake pedal sensor |
| 300 | drive device control unit |
| 300c | electric power control module |
| 400 | lean motor control unit |
| 400c | electric power control module |
| 420 | second P control module |
| 425 | second P gain control module |
| 430 | second D control module |
| 490 | second summing point |
| 500 | steering motor control unit |
| 500c | electric power control module |
| 520 | first P control module |
| 525 | first P gain control module |
| 530 | first D control module |
| 590 | first summing point |

**Claims**

1. A vehicle comprising:

a vehicle body;
N (N is an integer equal to or larger than 2) wheels including one or more turn wheels turnable to right and left relative to a forward movement direction of the vehicle, the N wheels including at least one front wheel and at least one rear wheel;
a lean angle sensor configured to measure a lean angle in a width direction of the vehicle body;
a lean actuator configured to apply to the vehicle body a lean torque for controlling the lean angle of the vehicle body;
an operation input unit configured to be handled to input an operation amount indicative of a turning direction and a degree of turn;
a turn wheel support unit that supports the one or more turn wheels; and
a controller,
wherein the turn wheel support unit comprises:

a supporting member that rotatably supports the one or more turn wheels;
a turning device that supports the supporting member turnably to right and left relative to the vehicle body; and
a turning actuator configured to apply to the supporting member a turning torque for turning the supporting member, and

wherein the controller is configured to:

determine a target lean angle using one or more parameters including the operation amount, the target lean angle being a lean angle targeted by the vehicle body;

determine a target lean torque and a target turning torque using the target lean angle, the target lean torque being a target torque of the lean actuator, the target turning torque being a target torque of the turning actuator;

control the lean actuator according to the target lean torque; and

control the turning actuator according to the target turning torque.

2. The vehicle of claim 1,

wherein if a rotational direction to rotate the vehicle body in its width direction so that the lean angle approaches the target lean angle, the rotational direction being either a right direction or a left direction, is referred to as a target direction,

the controller has a counter torque mode as a control mode for the turning actuator, the counter torque mode being a control mode that determines the target turning torque to be a counter torque causing the supporting member to rotate in a direction opposite to the target direction.

3. The vehicle of claim 2,

wherein the controller is configured in the counter torque mode to:

determine the target lean torque and the target turning torque using a lean angle difference between the target lean angle and the lean angle of the vehicle body; and

determine the target turning torque so that a magnitude of the target turning torque when a magnitude of the lean angle difference is larger than a first threshold is larger than the magnitude of the target turning torque when the magnitude of the lean angle difference is smaller than the first threshold.

4. The vehicle of claim 3,

wherein if a ratio of the magnitude of the target turning torque, the target turning torque being the counter torque, to the magnitude of the lean angle difference is referred to as a counter turning torque ratio,

the controller is configured in the counter torque mode to determine the target turning torque so that the counter turning torque ratio when the magnitude of the lean angle difference is larger than the first threshold is larger than the counter turning torque ratio when the magnitude of the lean angle difference is smaller than the first threshold.

5. The vehicle of claim 3 or 4, wherein if a ratio of the magnitude of the target lean torque to the magnitude of the lean angle difference is referred to as a lean torque ratio,

the controller is configured in the counter torque mode to determine the target lean torque so that the lean torque ratio when the magnitude of the lean angle difference is within a first range of larger than the first threshold is smaller than the lean torque ratio when the magnitude of the lean angle difference is within a second range, the second range being a particular range of smaller than the first threshold.

6. The vehicle of claim 5,

wherein the first range is a range of larger than the first threshold and smaller than a second threshold, the second threshold being larger than the first threshold, and

wherein the controller is configured in the counter torque mode to determine the target lean torque so that the lean torque ratio when the magnitude of the lean angle difference is larger than the second threshold is larger than the lean torque ratio when the magnitude of the lean angle difference is within the first range.

7. The vehicle of claim 5 or 6,

wherein the second range is a range of larger than a third threshold and smaller than the first threshold, the third threshold being smaller than the first threshold, and

the controller is configured in the counter torque mode to determine the target lean torque so that the lean torque ratio when the magnitude of the lean angle difference is smaller than the third threshold is smaller than the lean torque ratio when the magnitude of the lean angle difference is within the second range.

8. The vehicle of any one of claims 1 to 7,

wherein if a ratio of the magnitude of the target turning torque, the target turning torque being the counter torque, to the magnitude of the lean angle difference is referred to as a counter turning torque ratio,

the controller is configured in the counter torque mode to determine the target turning torque so that the counter turning torque ratio when the magnitude of the vehicle velocity is smaller than a fourth threshold is larger than the counter turning torque ratio when the magnitude of the vehicle velocity is larger than the fourth threshold.

Fig. 1

Fig. 2

Fig. 3

# Fig. 4

Fig. 5

(A)

(B)

Fig. 6

Fig. 7

# Fig. 8

Fig. 9

Fig. 10

Fig. 11

```
        ┌─────────────────────┐
        │  Control Process    │
        └──────────┬──────────┘
                   │
                   ▼            ⌒S100
        ┌─────────────────────────┐
        │   Acquiring Signals     │
        │ from Sensors and Switch │
        └────────────┬────────────┘
                     │
                     ▼        ⌒S110
                 ╱───────────╲           No
               ╱ Drive or Neutral? ╲──────────────────┐
               ╲                   ╱                   │
                 ╲───────┬───────╱                    │
                  Yes    │                            │
                         ▼    ⌒S130                   ▼    ⌒S170
              ┌─────────────────────┐     ┌─────────────────────┐
              │    First Control    │     │    Second Control   │
              └──────────┬──────────┘     └──────────┬──────────┘
                         │                           │
                         ▼◄──────────────────────────┘
                  ┌─────────────┐
                  │     End     │
                  └─────────────┘
```

Fig. 12

Fig. 13

EP 3 812 255 A1

```
                    ( Control Process )

                          │
                          ▼    S200              S210                      S220                    S230
              ┌───────────────────┐   ┌───────────────────┐   ┌───────────────────┐   ┌───────────────────┐
              │     Acquiring     │   │ Specifying Lean   │   │    Determining    │   │    Calculating    │
              │    Information     │──▶│     Angle T       │──▶│ Target Lean Angle │──▶│   Difference dT   │
              │                   │   │                   │   │        T1         │   │                   │
              └───────────────────┘   └───────────────────┘   └───────────────────┘   └───────────────────┘
                                                                                               │
                          ▼                                                                     ▼

                          ▼    S240                                     ▼    S300
              ┌───────────────────┐                         ┌───────────────────┐
              │    Determining    │                         │    Determining    │
              │    P Gain Kp1     │                         │    P Gain Kp2     │
              │      Using        │                         │      Using        │
              │ Vehicle Velocity V│                         │ Angular Difference│
              │and Angular        │                         │        dT         │
              │ Difference dT     │                         │                   │
              └───────────────────┘                         └───────────────────┘
                          ▼    S250         ▼    S260                   ▼    S310         ▼    S320
              ┌───────────────────┐ ┌───────────────────┐   ┌───────────────────┐ ┌───────────────────┐
              │    Determining    │ │    Determining    │   │    Determining    │ │    Determining    │
              │Proportional Term  │ │Derivative Term Vd1│   │Proportional Term  │ │Derivative Term Vd2│
              │       Vp1         │ │                   │   │       Vp2         │ │                   │
              └───────────────────┘ └───────────────────┘   └───────────────────┘ └───────────────────┘
                          ▼                 ▼                           ▼                 ▼

                                           ▼    S270                                      ▼    S330
              ┌─────────────────────────────────────┐   ┌─────────────────────────────────────┐
              │      Determining and Outputting     │   │      Determining and Outputting     │
              │          Control Value Vc1          │   │   Control Value Vc2 (Target Lean    │
              │ (Target Turning Torque (Counter     │   │            Torque))                 │
              │           Torque))                  │   │                                     │
              └─────────────────────────────────────┘   └─────────────────────────────────────┘
                                           ▼    S280                                      ▼    S340
              ┌─────────────────────────────────────┐   ┌─────────────────────────────────────┐
              │ Controlling Electric Power of       │   │ Controlling Electric Power of Lean  │
              │         Steering Motor              │   │            Motor                    │
              └─────────────────────────────────────┘   └─────────────────────────────────────┘
                                           ▼                                           ▼

                                              ( Return )
```

Fig. 14

(A)

(B)

(C)

(D)

Fig. 15

Fig.16

(A)

(B)

(C)

Fig. 17

## INTERNATIONAL SEARCH REPORT

| International application No. |
| --- |
| PCT/JP2019/024800 |

A. CLASSIFICATION OF SUBJECT MATTER
Int.Cl. B62K5/10(2013.01)i, B62J99/00(2009.01)i, B62K5/027(2013.01)i

According to International Patent Classification (IPC) or to both national classification and IPC

B. FIELDS SEARCHED

Minimum documentation searched (classification system followed by classification symbols)
Int.Cl. B62K5/10, B62J99/00, B62K5/027

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2018-34531 A (EQUOS RESEARCH CO., LTD.) 08 March 2018, paragraphs [0015]-[0101], fig. 1-14 & US 2018/0281886 A1, paragraphs [0039]-[0125], fig. 1-14 & WO 2018/043409 A1 & EP 3505434 A1 & CN 108025785 A | 1-2 |
| Y | JP 2011-230651 A (EQUOS RESEARCH CO., LTD.) 17 November 2011, paragraph [0031] (Family: none) | 1-2 |

☒ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 30 August 2019 (30.08.2019) | 10 September 2019 (10.09.0219) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

# EP 3 812 255 A1

| | INTERNATIONAL SEARCH REPORT | International application No. |
|---|---|---|
| | | PCT/JP2019/024800 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2016-165986 A (EQUOS RESEARCH CO., LTD.) 15 September 2016, paragraph [0060] & US 2017/0291637 A1, paragraph [0078] & WO 2016/143471 A1 & EP 3266690 A1 & CN 107074318 A | 1-2 |
| Y | JP 2013-23166 A (EQUOS RESEARCH CO., LTD.) 04 February 2013, paragraphs [0013]-[0046], fig. 13 & US 2014/0124286 A1, paragraphs [0030]-[0063], fig. 1-3 & WO 2013/015342 A1 & CN 103687782 A | 2 |
| A | 後藤健太郎, 村山英晶,　リーン・オートモービルの提案とその操縦性の予測, 自動車技術会大会学術講演会講演予稿集, 21 May 2018, ISSN:2189-4558, (GOTO, Kanetaro, MURAYAMA, Hideaki, "A Proposal of the Lean Automobile and the Calculation of its Maneuverability", Lecture preprints of the annual congress of the Society of Automotive Engineers of Japan) | 1-8 |
| A | 丸茂喜高, 大木陽平, 毛利宏, ステアバイワイヤによる二輪車の操縦安定性向上に関する研究（第 3 報, ロール角とヨーレイトを線形結合した制御量の提案,　日本機械学会論文集(C 編), 2013, vol. 79, no. 804, pp. 2841-2853, ISSN: 1884-8354, DOI:10.1299/kikaic.79.2841, (MARUMO, Yoshitaka, OKI, Yohei, MOURI, Hiroshi, "Improved Handling and Stability of Two-Wheeled Vehicles Using Steer-By-Wire Technology (3rd Report, Novel Controlled Variable with Linear Combination of Rolling Angle and Yaw Rate)", TRANSACTIONS OF THE JAPAN SOCIETY OF MECHANICAL ENGINEERS Series C) | 1-8 |
| A | 丸茂喜高, 大明洋輝, 横田武, モデルマッチング制御による二輪車の操舵制御の検討,　自動車技術会論文集, September 2017, vol. 48, no. 5, pp. 1107-1112, ISSN: 1883-0811 (online), 0287-8321 (print), DOI:10.11351/jsaeronbun.48.1107, (MARUMO, Yoshitaka, OAKI, Hiroki, YOKOTA, Takeru, "Steering Control for Motorcycles Using Model Matching Control", Transactions of Society of Automotive Engineers of Japan) | 1-8 |
| A | 桑原健吾, 片桐希, 丸茂喜高, 綱島均, マルチボディシミュレーションによる二輪車用ステアバイワイヤの検証, Dynamics & Design Conference, 日本機械学会, 2007, ISSN: 2424-2993, DOI:10.1299/jsmedmc.2007._408-1_, non-official translation (KUWAHARA, Kengo, KATAGIRI Nozomi, MARUMO, Yoshitaka, TSUNASHIMA, Hitoshi, "Verification of steer-by-wire for motorcycles by multi-body simulation", The Japan Society of Mechanical Engineers) | 1-8 |

Form PCT/ISA/210 (continuation of second sheet) (January 2015)

**INTERNATIONAL SEARCH REPORT**

<table>
<tr><td>International application No.</td></tr>
<tr><td>PCT/JP2019/024800</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| A | タン ジェフリー トゥ チュアン ほか，車幅の狭い傾斜車両の横転限界を向上させるジャイロモーメントを用いた安定制御，生産研究，March 2015, vol. 67, no. 2, pp. 171—176, ISSN:1881-2058(online), 0037-105X(print), DOI:10.11188/seisankenkyu.67.171, (TAN, Jeffrey, TOO, Chuan et al., "Stability Control with Gyro Moment to Improve Rollover Resistance of Narrow Tilting Vehicle", SEISAN KENKYU) | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013023166 A